(19) Europäisches Patentamt

European Patent Office

Office européen des brevets

(11) EP 0 871 326 B1

(12) **EUROPEAN PATENT SPECIFICATION**

(45) Date of publication and mention
of the grant of the patent:
**10.09.2003 Bulletin 2003/37**

(51) Int Cl.[7]: **H04N 3/15**, H04N 5/335

(21) Application number: **98104282.3**

(22) Date of filing: **10.03.1998**

(54) **Motion-detecting image sensor incorporating signal digitization**

Bildsensor mit integrierter Signaldigitalisierung für Bewegungserfassung

Capteur d'images pour détection de mouvement incorporant une numérisation du signal

(84) Designated Contracting States:
**BE DE FR GB NL**

(30) Priority: **10.03.1997 JP 5490897**
**18.06.1997 JP 16141997**
**16.06.1997 JP 15834297**
**14.10.1997 JP 28041797**

(43) Date of publication of application:
**14.10.1998 Bulletin 1998/42**

(73) Proprietor: **NIKON CORPORATION**
**Tokyo (JP)**

(72) Inventors:
• **Nomura, Hitoshi, c/o Nikon Corporation**
**2-3 Marunouchi 3-chome Chiyoda-ku, Tokyo (JP)**
• **Isogai, Tadao, c/o Nikon Corporation**
**2-3 Marunouchi 3-chome Chiyoda-ku, Tokyo (JP)**
• **Akagawa, Keiichi, c/o Nikon Corporation**
**2-3 Marunouchi 3-chome Chiyoda-ku, Tokyo (JP)**

(74) Representative: **Viering, Jentschura & Partner**
**Postfach 22 14 43**
**80504 München (DE)**

(56) References cited:
**EP-A- 0 719 048**

## Description

## Field of the Invention

The present invention relates to solid-state motion-detecting image sensors, and more particularly to motion-detecting image sensors capable of providing a digitized output signal representative of motion detected by the image sensor.

## Background of the Invention

Motion-detecting image sensors operate generally as follows. A first set of image data is obtained by means of an array or matrix of light-sensitive elements (pixels) and is stored as data for a "first frame." A second set of image data (data for a "second frame"), is then obtained by means of the matrix and stored. Motion of objects represented by the image data may then be detected through a comparison of the data for the first frame with the data for the second frame.

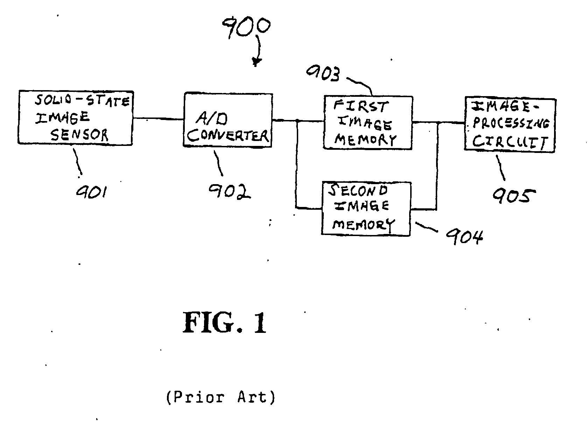

FIG. 1 illustrates a conventional motion detector 900 utilizing an image sensor. The motion detector 900 includes a solid-state image sensor 901, an, analog-to-digital converter 902, first and second image memories 903, 904, and an image-processing circuit 905. The solid-state image sensor 901 captures image data as analog video signals, which are digitized by the A/D converter 902. The resulting digital data is supplied alternately to the first and second image memories 903, 904. The image-processing circuit 905 compares the digital data stored in the first and second image memories 903 and 904, and generates data which represents the motion of the object(s) being detected.

Generally, the analog video signals obtained by the solid-state image sensor 901 in a first time frame are digitized by the A/D converter 902 and stored in one of the first and second image memories 903, 904, as digital video signals of a first time frame. Next, analog video signals are obtained by the solid-state image sensor 901 in a second time frame, and are stored, after analog-to-digital conversion, in the other of the first and second image memories 903, 904, as digital video signals of a second (subsequent) time frame. The image-processing circuit 905 then compares, for each image pixel (i.e., for each picture element, or sensor, in the matrix) the magnitudes of the corresponding digital signals stored in the first and second image memories 903, 904, and detects the pixels in which voltage difference between the first frame (i.e., the first frame) and the second frame (i.e., the second frame) exceeds a predetermined threshold.

The digital signals stored in one of the first and second memories 903, 904 represent the luminance at the respective light-sensitive elements of the solid-state image sensor 901 in the first time frame, while the digital signals stored in the other of the first and second memories 903, 904 represent the luminance of the respective light-sensitive elements of the solid-state image sensor 901 in the second time frame.

By comparing the two sets of digital signals output from the same element in two successive time frames (i.e., the initial frame and the subsequent frame), the image-processing circuit 905 detects the difference in the luminance between the two successive time frames as binary data, whereby moving bodies can be distinguished from the background. By repeating this operation, the motion of the moving bodies is continuously detected.

In conventional motion-detecting image sensors such as the motion detector 900, the circuit structure around the solid-state image sensor 901 is rather complicated and, consequently, the motion detector 900 as a whole is relatively expensive.

In addition, because the original video signals corresponding to the incident light generated by the sensor matrix of the solid-state image sensor 901 are analog signals, and because they are supplied to the A/D converter 902 still in analog form, these signals are rather easily affected by noise.

Furthermore, the analog video signals are subject to filtration upon input to the A/D converter 902, limiting the dynamic range of the signals. Thus, the effective dynamic range of the A/D converter 902 is narrower than that of the solid-state image sensor 901, so that the full dynamic range of the solid-state image sensor 901 cannot be utilized in the motion-detection process.

A conventional approach to solving these problems is to provide a motion-detecting image sensor includes, in each pixel of a matrix of pixels, a memory for storing the image signal of a first frame, and a memory for storing the image signal of a frame immediately following the first frame. A circuit for comparing the image signals stored in these memories is included in each pixel. For each pixel, a signal is generated corresponding to the difference between the stored signals. However, this arrangement complicates the structure of each of the pixels of the image sensor. As a result, the aperture efficiency and resolution of the solid-state image sensor decreasee, and the number of pixels in the image sensor cannot easily be increased.

Another image sensor avoiding some of these problems has been proposed in U.S. Patent No. 5,631,704. The proposed image sensor provides differential image signals without the use of external circuitry such as A/D converters and memories. But, the proposed sensor is still rather sensitive to noise and still requires some external circuitry to provide for motion detection.

A motion detection camera system has been proposed in EP 0 719 048 which includes an active pixel imaging system operable in a video and differential mode connected to a mode activation circuit that controls the imaging system mode.

A simpler pixel structure is desirable in order to increase the potential aperture efficiency and resolution of the image sensor.

Objects and Summary of the Invention

It is an object of the present invention to provide a high-performance motion-detecting solid-state image sensor having a simple structure and that does not require external image-processing circuity or other external circuity to detect motion.

This is accomplished, according to one aspect of the present invention, by providing an image sensor as set out in claim1.

According to another aspect of the invention, the pixels of an image-sensor array may be of three types, each type being sensitive to a different color of incident light. An "RGB" or a "CMY" scheme is useful. This aspect allows motion detection in an image when luminous intensity does noc vary, but spectral intensity does.

According to yet another aspect of the present invention, electric charge generated and stored in pixels of an image sensor is supplied to the gate of an amplifier directly and easily. In comparison with the case in which the electric charge is transferred to the gate via a signal line, the degree of deterioration of the signal due to the distribution of the electric charge during the transfer process is reduced. Sensitivity to noise is also reduced.

According to yet another aspect of the present invention, the pixels are connected to or separated from the vertical readout lines using capacitative coupling. In comparison to a conventional case in which MOS transistors or the like are used, the structure of the apparatus is simplified, and the overall size of each of the pixels can be reduced.

According to yet another aspect of the invention, the binarizing comparator has an externally settable threshold for difference detection, allowing variable sensitivity in motion detection.

According to yet another aspect of the present invention, a buried photo-diode is used as the light detector in each pixel of the image sensor. Dark current, blooming, and smearing are thus reduced.

The foregoing and other objects, features, and advantages of the invention will become more apparent from the following detailed description of preferred embodiments which proceeds with reference to the accompanying drawings.

**Brief Description of the Drawings**

FIG. 1 is a block diagram showing the general elements of a conventional motion detector 900.

FIG. 2 is a schematic diagram of the circuit structure of a motion-detecting solid-state image sensor 10 according to first example embodiment of the present invention.

FIG. 3 is a timing chart illustrating the operation of the FIG.-2 embodiment.

FIG. 4 is a schematic diagram of the circuit structure of a difference-value-detection circuit 7 useful in the FIG.-2 embodiment.

FIG. 5 is a graph of the input-output characteristics of a difference-value detector XA of the difference-value-detection circuit 7 of FIG. 4.

FIG. 6 is a schematic diagram of the circuit structure of a motion-detecting solid-state image sensor 20 according to a second example embodiment of the present invention.

FIG. 7 is a schematic diagram of the circuit structure of a motion-detecting solid-state image sensor 30 according to a third example embodiment of the present invention.

FIG. 8 is a timing chart illustrating the operation of the FIG.-7 embodiment.

FIG. 9 is a schematic diagram of the circuit structure of a motion-detecting solid-state image sensor 40 according a fourth example embodiment of the present invention.

FIG. 10 is a schematic diagram of circuit structure of a motion-detecting solid-state image sensor 50 according to a fifth example embodiment of the present invention.

FIG. 11 is a timing chart illustrating the operation of the FIG.-10 embodiment.

FIG. 12 is a schematic diagram of the circuit structure of a motion-detecting solid-state image sensor 110 according to a sixth example embodiment of the present invention.

FIG. 13 is a timing chart illustrating the operation of the FIG.-12 embodiment.

FIG. 14 is a schematic diagram of the circuit structure of a motion-detecting solid-state image sensor 120 according to a seventh example embodiment of the present invention.

FIG. 15 is a schematic diagram of the circuit structure of a motion-detecting solid-state image sensor 140 according to an eighth example embodiment of the present invention.

FIG. 16 is a timing chart illustrating the operation of the FIG.-15 embodiment.

FIG. 17 is schematic diagram of the circuit structure of a motion-detecting solid-state image sensor 310 according to a ninth example embodiment of the present invention.

FIG. 18 is a schematic diagram of the circuit structure of a unit circuit 320A of the difference-value-detection circuit 320 of the FIG.-17 embodiment.

FIG. 19 is a schematic diagram of the circuit structure of a unit circuit 330A of a video-signal generator 330 of the FIG.-17 embodiment.

FIG. 20 is a timing chart illustrating the operation of the FIG.-17 embodiment.

FIG. 21 is a timing chart illustrating the operation of a tenth example embodiment of the present invention.

FIG. 22 is a plan view of the structure of a motion-detecting solid-state image sensor according to an eleventh example embodiment of the present invention.

FIG. 23 is a cross-sectional elevational view of the structure shown in FIG. 22, taken along the line II-II indicated in FIG. 22.

FIG. 24 is a cross-sectional elevation view of the structure shown in FIGS. 22 and 23, taken along the line III-III indicated in FIG. 22.

FIG. 25 is a schematic diagram of the circuit structure of a motion-detecting solid-state image sensor 500 according to the eleventh example embodiment of the present invention.

FIG. 26 is a schematic diagram of the circuit structure of a motion-detecting solid-state image sensor 200 according to a twelfth example embodiment of the present invention.

FIG. 27 is a timing chart illustrating the operation of the FIG.-26 embodiment.

## Detailed Description

### First Example Embodiment

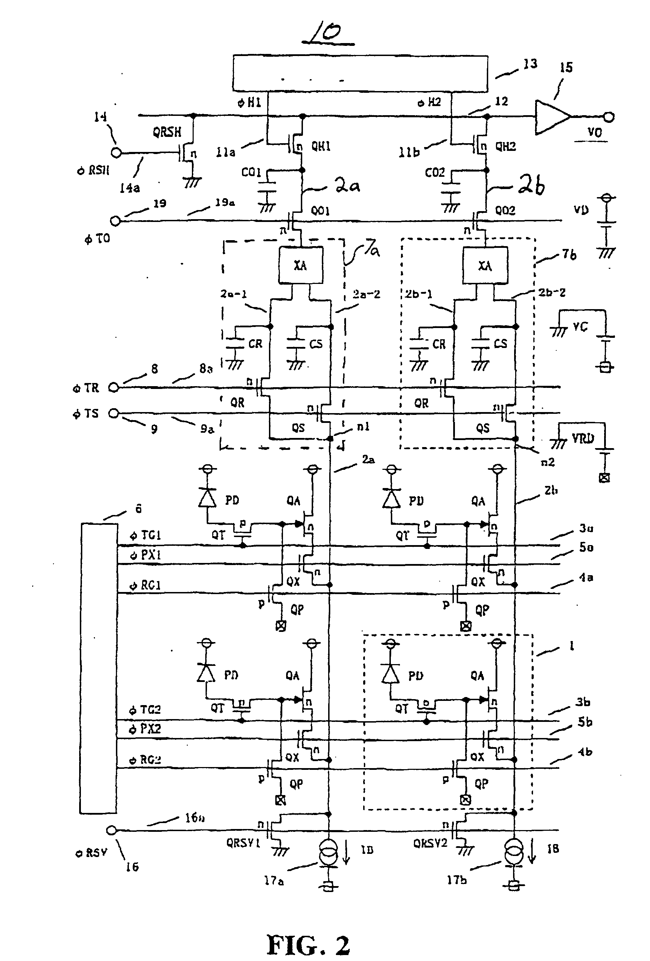

FIG. 2 schematically shows the circuit of a first example embodiment of a motion-detecting solid-state image sensor 10 according to the present invention. For ease of illustration, four picture elements (pixels) 1 are arranged in the form of a 2 x 2 matrix in FIG. 2. (The other three of the four picture elements are above, left, and above-left of the indicated picture element 1.) An actual image sensor would of course employ a much larger array (matrix) of picture elements arranged in rows and columns in the array.

The picture elements in the first (left) column of the matrix are connected to a vertical readout line 2a. The picture elements in the second (right) column of the matrix are connected to another vertical readout line 2b. The picture elements in the first (top) row of the matrix are connected to a vertical scan circuit 6 via clock lines 3a, 4a, and 5a. Similarly, the picture elements in the second (bottom) row of the matrix are connected to the vertical scan circuit 6 via clock lines 3b, 4b, and 5b.

The vertical scan circuit 6 operates to transfer, from the picture elements in the first and second columns of the matrix to the vertical readout lines 2a and 2b, respectively, electric signals generated in response to incident light. The electric signals are transferred at a prescribed timing.

The vertical readout line 2a, which is positioned along the first column of the matrix, is connected to a horizontal readout line 12 via a first difference-value-detection circuit 7a, and an NMOS horizontal readout transistor QH1. Similarly, the vertical readout line 2b, which is positioned along the second column of the matrix, is connected to the horizontal readout line 12 via a second difference-value-detection circuit 7b, and an NMOS horizontal readout transistor QH2. The gate of the horizontal readout transistor QH1 is connected to a horizontal scan circuit 13 via a horizontal selection line 11a. Similarly, the gate of the horizontal readout transistor QH2 is connected to the horizontal scan circuit 13 via a horizontal selection line 11b. Difference-value-signal storage capacitors CO1 and CO2 are connected to the vertical readout lines 2a and 2b, respectively.

Each difference-value-detection circuit 7a, 7b operates as follows. Signals are read out from each of the picture elements in the matrix in a two-step process. The following example is given with respect to the picture element 1 and the difference-value-detection circuit 7b in the second column of the matrix. First, a first signal, corresponding to the incident light from a previous frame, is transmitted, via vertical readout line 2b, from the picture element 1 to the difference-value-detection circuit 7b and is stored in a first respective signal-storing capacitor CR. Next, a second signal, corresponding to incident light from a present frame, is transmitted, via vertical readout line 2b, from the picture element 1 to the difference-value-detection circuit 7b, and is stored in a second respective signal-storing capacitor CS. The difference-value-detection circuit 7 compares the first signal and the second signal and outputs the result of the comparison as a signal (a difference-value signal). Each of the difference-value-detection circuits performs the above-described comparison for each picture element in its column in turn.

The difference-value signals that are transmitted from the left and right difference-value-detection circuits 7 are stored temporarily in the difference-value signal-storage capacitors CO1 and CO2, respectively. A difference-value signal from the left difference-value-detection circuit 7 is transmitted to the horizontal readout line 12 when a driving pulse $\phi$H1, supplied from the horizontal scan circuit 13 via the horizontal selection line 11a, turns on the horizontal readout transistor QH1. Similarly, a difference-value signal from the right difference-value-detection circuit 7 is transmitted to the horizontal readout line 12 when a driving pulse $\phi$H2, supplied from the horizontal scan circuit 13 via the horizontal selection line 11b, turns on the horizontal readout transistor QH2. Difference-value signals from each column are preferably interleaved, and are output from an output VO via an output buffer amplifier 15.

Each of the picture elements 1 includes: (1) a light detector or photoelectric conversion device preferably in the form of a photo-diode PD for generating and storing an electric charge corresponding to incident light; (2) an n-channel JFET amplification transistor QA for outputting, across the source-drain regions thereof in response to the electric charge that has been supplied to the gate (control region) of the amplification transistor QA, an analog signal that corresponds to the charge at the gate; (3) a PMOS transfer transistor QT for directly and selectively transferring electric charge generated and stored in the photo-diode PD to the gate of the amplification transistor QA; (4) a PMOS reset transistor QP for resetting the electric charge of the gate of the amplification transistor QA; and (5) an NMOS picture element separation transistor QX, connected between the amplification transistor QA and an associated one of the vertical readout lines 2a and 2b, for selectively connecting and disconnecting the source of the amplification transistor QA from the associated one of the readout lines 2a and 2b.

In comparison with configuration in which the electric charge is transferred via a metal signal line, such as a MOS gate or capacitor plate or the equivalent, the configuration of the FIG.-2 embodiment reduces the degree of deterioration of the signal due to noise arising during the transfer of the signal charge by transferring the electric charge directly (through a very short distance in silicon) to the gate of the amplification transistor as explained above. The image Signal-to-noise ratio of the motion-detecting solid-state image sensor 10 is thus improved.

Each of the picture elements 1 preferably operates as follows. The signal (signal charge) corresponding to the incident light detected by the photo-diode PD is supplied to the gate of the amplification transistor QA. The signal is amplified by the source-follower operation of the gate. The resultant electric signal is read out by a corresponding one of the vertical readout lines, 2a, 2b.

Each of the sources of the two amplification transistors QA contained in the first column of the matrix is connected to the vertical readout line 2a via the corresponding separation transistor QX. Similarly, each of the sources of the two amplification transistors QA contained in the second column of the matrix is connected to the vertical readout line 2b via the corresponding separation transistor QX. A power supply voltage VD (positive) is applied to the drain of each of the four amplification transistors QA and to the cathode side of each of the photo-diodes PD.

In each picture element 1, the source-drain of the transfer transistor QT is connected to the anode side of the photo-diode PD and to the gate of the amplification transistor QA. Each of the transfer gates of the two transfer transistors QT contained in the first row of the matrix is connected to the clock line 3a. Similarly, each of the transfer gates of the two transfer transistors QT contained in the second row of the matrix is connected to the clock line 3b. The vertical scan circuit 6 is connected to the clock lines 3a and 3b and transmits driving pulses φTG1 and φTG2, respectively, to the transfer gate of each of the transfer transistors QT, respectively, contained in the matrix. I.e., the two transfer transistors QT contained in the first row of the matrix are activated in response to the level of the driving pulse φTG1, and the two transfer transistors QT contained in the second row of the matrix are activated in response to the level of the driving pulse φTG2.

A power supply voltage VRD is connected and applied in common to the drain of the reset transistor QP of each of the four picture elements 1 of the matrix.

The gates of the two reset transistors QP contained in the first row of the matrix are connected to the clock line 4a that is connected to the vertical scan circuit 6. The gates of the two reset transistors QP contained in the second row of the matrix are connected to the clock line 4b that is connected to the vertical scan circuit 6. For each of the picture elements of the matrix, the transistor QP shares the same source as the transfer transistor QT.

The transfer gate of each of the transfer transistors QT contained in the matrix is activated by the corresponding driving pulse φTG1 or φTG2 from the vertical scan circuit 6.

The two reset transistors QP contained in the first row of the matrix are activated in response to the level of the driving pulse φRG1, and the two reset transistors QP contained in the second row of the matrix are activated in response to the level of the driving pulse φRG2.

Each of the gates of the two separation transistors QX contained in the first row of the matrix is connected to the clock line 5a. Similarly, each of the gates of the two separation transistors QX contained in the second row of the matrix is connected to the clock line 5b. The vertical scan circuit 6 is connected to the clock lines 5a and 5b and transmits corresponding driving pulses φPX1 or φPX2 to the gate of each of the separation transistors QX contained in the matrix. I.e., the two separation transistors QX contained in the first row of the matrix are activated in response to the level of the driving pulse φPX1. The two picture element separation transistors QX contained in the second row of the matrix are activated sequentially in response to the level of the driving pulse φPX2.

One difference-value-detection circuit 7 is situated on the vertical readout line 2a, and another difference-value-detection circuit 7 is situated on the vertical readout line 2b. The left difference-value-detection circuit, connected to the vertical readout line 2a, is connected to the difference-value-signal storing capacitor CO1 via an NMOS switching transistor QO1. similarly, the right difference-value-detection circuit 7, connected to the vertical readout line 2b, is connected to the difference-value-signal storing capacitor CO2 via an NMOS switching transistor QO2.

The difference-value-signal storing capacitors CO1 and CO2 are connected to the horizontal readout line 12 via respective NMOS horizontal readout transistors QH1 and QH2. The gates of switching transistors QO1 and Q02 are connected to a node 19 of a driving-pulse-generating circuit (not shown) via a clock line 19a. The switching transistors QO1 and QO2 are activated in response to the level of a driving pulse φTO that is supplied to node 19 by the driving-pulse-generating circuit.

The horizontal selection lines 11a and 11b are connected to the horizontal scan circuit 13. The gates of the horizontal readout transistors QH1 and QH2 are connected to the horizontal selection lines 11a and 11b, respectively. The signals that are stored in the difference-value signal-storing capacitors CO1 and CO2 are read out in response to the levels of driving pulses φH1 and φH2, respectively, that are supplied by the horizontal scan circuit 13.

The difference-value signal that is output from the difference-value-detection circuit 7 is read out through the horizontal readout line 12. (The generation of this difference-value signal, which signal generally represents the voltage difference between the electric signal of a first frame and the electrical signal of a second frame, will be explained in detail later). The difference-value signal is output sequentially from an output VO via the output buffer amplifier 15. The drain of an NMOS horizontal reset transistor QRSH is connected to the horizontal readout line 12.

The source of the horizontal reset transistor QRSH is grounded. The gate of the horizontal reset transistor QRSH is connected to a node 14 on a driving-pulse-generating circuit (not shown in the drawing) via a clock line 14a. The horizontal reset transistor QRSH is activated in response to the level of a driving pulse φRSH that is supplied to node 14 from the driving-pulse-generating circuit.

As shown at the bottom of FIG. 2, the drain of a vertical reset transistor QRSV1 and a current source 17a are connected to the vertical readout line 2a. Similarly, the drain of a vertical reset transistor QRSV2 and a current source 17b are connected to the vertical readout line 2b. The sources of the vertical reset transistors QRSV1 and QRSV2 are grounded, and a power supply voltage VC (negative) is supplied to the current sources 17a and 17b.

A driving-pulse-generating circuit (not shown in the drawing) is connected to a node 16. A driving pulse φRSV is supplied from the driving-pulse-generating circuit to the gates of the vertical reset transistors QRSV1 and QRSV2 via the node 16 and a clock line 16a. These vertical reset transistors QRSV1 and QRSV2 are activated in response to the level of the driving pulse φRSV.

As shown in FIG. 2, the left difference-value-detection circuit 7 is connected to the vertical readout line 2a, and the right difference-value-detection circuit 7 is connected to the vertical readout line 2b. Each difference-value-detection circuit 7 includes an NMOS first switching transistor QR, an NMOS second switching transistor QS, a first signal-storing capacitor CR, a second signal-storing capacitor CS, and a difference-value detector XA. The first and second switching transistors QR, QS selectively and independently connect the first and second signal-storing capacitors CR, CS, respectively, to the vertical readout line 2a. The first and second signal-storing capacitors CR and CS store individual signals provided sequentially on the vertical readout line 2a. The difference-value detector XA outputs a difference-value signal, in the form of a logic high-level signal or a logic low-level signal, when the electric signal that is stored in the first signal-storing capacitor CR differs in voltage (by a given threshold) from that stored in the second signal-storing capacitor CS.

In each of the left and right difference-value detection circuits 7, the difference-value detector XA outputs a difference-value signal (a digital signal). As shown in FIG. 2, the vertical readout line 2a branches out into two readout lines 2a-1 and 2a-2 at a node n1 in the left difference-value-detection circuit 7, and the vertical readout line 2b branches out into two readout lines 2b-1 and 2b-2 at a node n2 in the right difference-value-detection circuit 7.

A may be seen from FIG. 2, one of the two terminals of the first signal-storing capacitor CR in the left difference-value-detection circuit 7 is connected to the first switching transistor QR that serves as a switch for the vertical readout line 2a, and to the readout line 2a-1 on the downstream side of the first switching transistor QR (i.e., above the first switching transistor QR in FIG. 2). Similarly, one of the two terminals of the first signal-storing capacitor CR that is contained in the right different-value-detection circuit 7 is connected to the first switching transistor QR that serves as a switch for the vertical readout line 2b, and to the readout line 2b-1 on the downstream side of the first switching transistor QR (i.e., above the first switching transistor QR in FIG. 2). The other terminals of the first signal-storing capacitors CR, contained in both the left and right difference-value-detection circuits 7, are grounded.

As may be further seen in FIG. 2, one terminal of the second signal-storing capacitor CS that is contained in the left difference-value-detection circuit 7 is connected to the second switching transistor QS that serves as a switch for the vertical readout line 2a, and to the readout line 2a-2 on the downstream side of the second switching transistor QS (i.e., above the second switching transistor QS in FIG. 2). Similarly, one terminal of the second signal-storing capacitor CS that is contained in the right difference-value-detection circuit 7 is connected to the second switching transistor QS that serves as a switch for the vertical readout line 2b, and to the readout line 2b-2 on the downstream side of the second switching transistor QS (i.e., above the second switching transistor QS in FIG. 2). The other terminals of the second signal-storing capacitors CS, contained in both the left and right difference-value-detection circuits 7, are grounded.

The two readout lines 2a-1 and 2a-2 on the vertical readout line 2a are connected, respectively, to two inputs of the difference-value-detector XA contained in the left difference-value-detection circuit 7. Similarly, the two readout lines 2b-1 and 2b-2 on the vertical readout line 2b are connected, respectively, to the two inputs of the difference-value detector XA contained in the right difference-value-detection circuit 7. The gates of the first switching transistors QR contained in the left and right difference-value-detection circuits 7 are connected to a node 8 on a driving-pulse-generating circuit (not shown) via a clock line 8a. The gates of the second switching transistors QS contained in the left and right difference-value-detection circuits 7 are connected to a node 9 on the driving-pulse-generating circuit (not shown) via a clock line 9a. The first switching transistors QR are activated in response to the level of the driving pulse φTR that is supplied from the driving-pulse-generating circuit (not shown). The second switching transistors QS are activated in response to the level of the driving pulse φTS that is supplied from the driving-pulse-generating circuit (not shown).

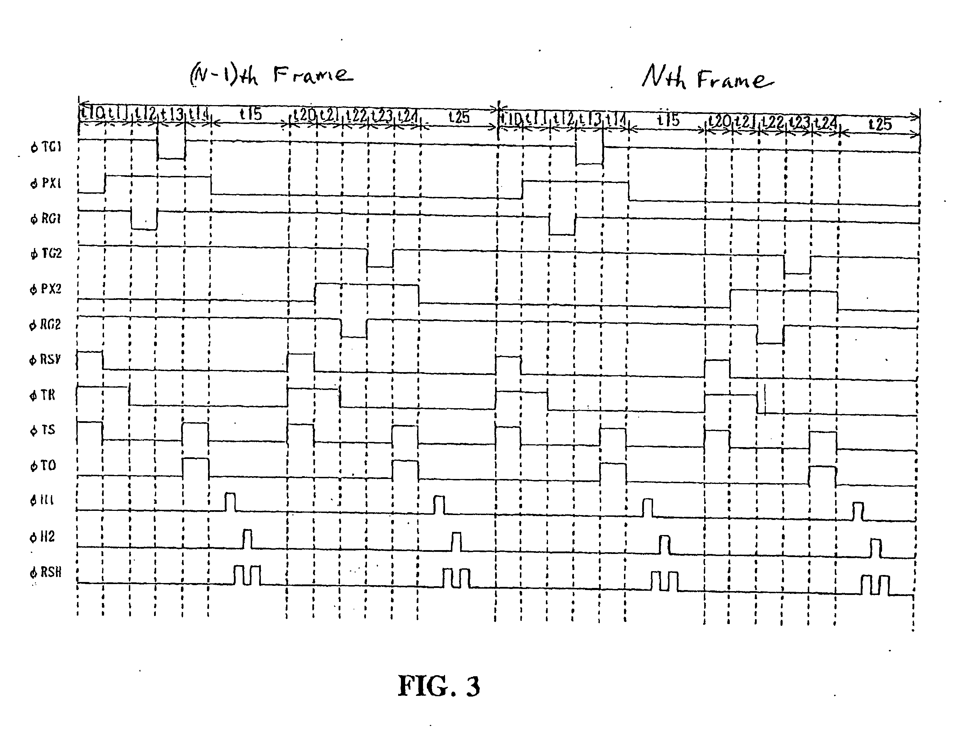

The timing chart to the FIG.-2 embodiment shown in FIG. 3 illustrates the preferred operation of the motion-detecting solid-state image sensor 10, the structure of which has been described above. Each picture element 1 periodically detects the incident light for a prescribed time interval. FIG. 3 illustrates a case in which the picture elements detect the incident light during two consecutive frames, namely, the (N-1)th frame (the first or initial frame) and the Nth frame (the second or present frame), and read out a signal representing the incident light.

Of the four picture elements 1 that are arranged in the form of a matrix, the picture elements contained in the same row are read out by the same operation. In FIG. 3, the time intervals t10 through t15, of both the (N-1)th and the Nth frame, indicate the readout operation of the two picture elements in the first row, and the time intervals t20 through t25, of both the (N-1)th and the Nth frame, indicate the readout operation of the two picture elements in the second row. In what follows, the readout operation of the two picture elements in the first row, in the Nth frame (second or present frame) will be explained primarily. Thus, the readout operation will be explained from the beginning of the time interval t10 of the Nth frame of the timing chart shown in FIG. 3. (It should be noted that the readout operation in the (N-1)th frame is identical to that in the Nth frame explained in the following.)

Just before the time interval t10 of the Nth frame, (at the end of the time interval t25 of the (N-1)th frame), the driving pulses φTG1 and φTG2 are high, the driving pulses φPX1 and φPX2 are low, the driving pulses φRG1 and φRG2 are high, the driving pulses φRSV, φTR, and φTS are low, the driving pulse φTO is low, and the driving pulses φH1, φH2, and φRSH are low.

Before the beginning of the time interval t10, because the driving pulses φTG1 and φTG2 are high, the transfer transistor QT in each of the picture elements 1 is turned off. The reset transistor QP in each of the picture elements 1 is also turned off, since the driving pulses φRG1 and φRG2 are also high. Thus, the gate of the amplification transistor QA in each of the picture elements 1 is in a floating state.

In each of the picture elements 1, the electric charge (the first signal charge or previous signal charge) that corresponding to the incident light generated in the photo-diode PD during the (N-1)th frame has been transferred to the gate of the amplification transistor QA via the transfer transistor QT when the transfer transistor QT was turned on during the (N-1)th frame. In each of the elements 1, by the parasitic capacitance effect of the amplification transistor QA, the first (or previous) signal charge remains stored in the gate of the amplification transistor QA, even after the transfer transistor QT has been turned off. In this way, in each of the picture elements 1, the amplification transistor QA outputs, by source-follower operation, an electric signal that corresponds to the incident light from the (N-1)th frame, until the electric charge that has been stored in the gate is reset.

In each of the elements 1, after the transfer transistor QT has been turned off in the (N-1)th frame, each of the photo-diodes PD again generates and stores an electric charge (second signal charge, or present signal charge) that corresponds to the incident light received in the Nth frame.

Before the beginning of the time interval t10, the separation transistor QX in each of the picture elements 1 is off since the driving pulses φPX1 and φPX2 are low. Thus, the picture elements 1 are separated from the vertical readout lines 2a and 2b. The vertical reset transistors QRSV1 and QRSV2 are also off since the driving pulse φRSV is low.

Before the beginning of the time interval t10, the first and second switching transistors QR and QS in the left and right difference-value-detection circuits 7 are off because the driving pulses φTR and φTS are low. Thus, any electric signals transmitted through the vertical readout lines 2a and 2b are not supplied to any of the first and second signal-storing capacitors CR and CS.

Also before the beginning of the time interval t10, the switching transistors QO1 and QO2 remain turned off since the driving pulse φTO is low. Thus, the electric signals from the left and right difference-value-detection circuits 7 are not supplied to the difference-value signal-storing capacitors CO1 and CO2.

At the start of the time interval t10, each of the driving pulses φRSV, φTR, and φTS changes from a low-level to a high-level. The vertical reset transistors QRSV1 and QRSV2, and the switching transistors QR and QS, are thus turned on. As a result, electric charge remaining in the first and second signal-storing capacitors CR and CS is eliminated.

At the end of the time interval t10 (i.e., at the beginning of the time interval t11), the driving pulses φRSV and φTS are returned to a low-level. Thus the vertical reset transistors QRSV1 and QRSV2, and the second switching transistors QS in the left and right difference-value-detection circuits 7 are turned off. (The first switching transistors QR in the left and right difference-value-detection circuits 7 remain turned on.)

Also at the start of the time interval t11, the driving pulse φPX1 is switched high. Thus, the separation transistors QX in the first row of the matrix of picture elements are turned on. Thus, the left-most amplification transistor QA and the right-most amplification transistor QA in the first row of the matrix are connected to the vertical readout lines 2a and 2b, respectively, i.e., they are "selected." The first or initial signal charge corresponding to the incident light during the (N-1)th frame has already been transferred, during the (N-1)th frame, to the gate of the amplification transistor QA of each of the picture elements 1 in the first row. The initial signal change is still being held by the gate after the transfer transistors QT have been turned off. Therefore, an electric signal that corresponds to the first or initial signal charge is output to the vertical readout lines 2a and 2b.

As has been mentioned in the above, in the time interval t11, the vertical reset transistors QRSV1 and QRSV2 remain turned off, so when the selected amplification transistors QA (those in the first row of the matrix) perform a source-follower operation, the voltage of the source increases until the electric current that flows between the source and the drain (i.e., the drain current) reaches a level IB (the value of the electric current that flows through the current sources 17a and 17b). Each of the amplification transistors QA in the first row thus outputs, by source-follower operation, a first or initial output signal corresponding to the first or initial signal charge. The first output signal is stored in the first signal-storing capacitor CR via the first switching transistor QR that has already been turned on during the time interval t11.

In the time interval t11, each of the separation transistors QX in the second row remains turned off since the driving pulse φPX2 is still at a low-level. Thus, the sources of the amplification transistors QA in the second row are not connected to the vertical readout lines 2a and 2b, i.e, they are not selected.

At the end of the time interval t11 (i.e., at the beginning of the time interval t12), the driving pulse φRG1 returns to a low level, and the driving pulse φTR returns to a low level.

When the driving pulse φTR returns to a low level, the first switching transistors QR are turned off. The first signal-storing capacitor CR is thus placed into a floating state and stores the first output signal. As explained above, the first output signal is an output signal representative of the incident light collected during the (N-1)th frame. If this first output signal is denoted by VSS1, the value of VSS1 can be expressed by the following equation:

$$VSS1 = VRD + VS1 - VT \qquad (1)$$

where VRD represents the amount of the power-supply voltage that was supplied when the reset transistor QP was turned on (in the (N-1)th frame), VS1 represents the amount of increase of the gate potential of the amplification transistor QA that corresponds to the first or initial signal charge collected in the (N-1)th frame, and VT represents the gate-source voltage drop when the drain current of the amplification transistor QA is IB. The value of VS1 may be represented by the fraction: (first signal charge)/(gate capacitance).

In the time interval t11, the electric potential across the first signal-storing capacitor CR becomes VSS1 as expressed by equation (1). This potential VSS1 is accumulated in the first signal-storing capacitor CR by the time the driving pulse φTR returns to a low level at the end of the time interval t11 (i.e., at the beginning of the time interval t12), thereby turning off the first switching transistor QR. The value VSS1 is then held in the capacitor CR in the form of the potential difference VSS1 across the first signal-storing capacitor CR.

In the time interval t12, when the driving pulse φRG1 returns to a low level, each of the reset transistors QP in the first row of the matrix is turned on. The power supply voltage VRD is thus supplied to the gate of each amplification transistor QA in the first row. Thus, the first or initial signal charge is released from the gate of the amplification transistor QA, and the gate of the amplification transistor QA is biased to the power supply voltage VRD (i.e., the gate is reset.)

At the end of the time interval t12 (i.e., at the beginning of the time interval t13), the driving pulse φTG1 goes low and the driving pulse φRG1 goes high. When the driving pulse φRG1 goes high, each reset transistor QP in the first row is turned off, and the gates of the amplification transistors QA in the first row are put into a floating state. As a result of parasitic capacitance of the gates of the amplification transistors QA, however, the gates remain biased to the power supply voltage VRD.

When the driving pulse φTG1 goes low, the transfer transistor QT of each of the picture elements 1 in the first row is turned on. The second or present signal charge, generated and stored by each photo-diode PD in the first row during the Nth frame, is transferred directly to each gate of each associated amplification transistor QA in the first row. This second or present signal charge corresponds to the incident light received by the photo-diodes PD in the Nth frame.

When the second or present signal charge is transferred directly to the gate of the amplification transistor QA of each of the picture elements 1 in the first row, the gate potential of each of the amplification transistors QA in the first row increases by the amount of the transferred electric charge, and each amplification transistor QA in the first row performs a source-follower operation. As a result, the potential of the source of each amplification transistor QA in the first row rises by an amount corresponding to the gate potential. Each amplification transistor QA in the first row outputs a second or present output signal, corresponding to the second or present signal charge, to the vertical readout lines 2a and 2b, via the associated separation transistor QX, which is turned on.

At the end of the time interval t13 (i.e., at the beginning of the time interval t14), the driving pulse φTG1 goes high, and the driving pulses φTS and φTO also go high.

When the driving pulse φTG1 goes high, each transfer transistor QT in the first row is turned off, and the transfer of the second signal charge from each photo-diode PD to the gate of each amplification transistor QA in the first row is complete. The gate of the amplification transistor QA of each picture element 1 in the first row is thus put into a floating state. The parasitic capacitance effect of the gate stores the second or current signal charge.

The electric charge that has been transferred to the gate as the second or present signal charge of the Nth frame is held until the gate is reset in the (N+1) th frame (not shown in FIG. 3). The electric charge that is stored in the gate in the Nth frame is used as the first or previous signal charge in the (N+1)th frame.

By the source-follower operation that persists until the gate is reset, the amplification transistor QA outputs a second or present signal that corresponds to the second or present signal charge that is stored in the gate.

In the time interval t14, with the driving pulse φTS at high, the second switching transistor QS is on in both columns of the matrix. The second output signal, which is output from each of the amplification transistors QA, is thus stored in each of the second signal-storing capacitors CS via the vertical readout lines 2a and 2b. (The separation transistors QX are already on, from the beginning of time period t11.)

In the time interval t14, when the source-drain current of the amplification transistors QA (by the source-follower operation) becomes IB, the value of the electric potential VSS2 (the second or present output signal) of the source of the amplification transistor QA can be expressed by the following equation:

$$VSS2 = VRD + VS2 - VT \qquad (2)$$

where VS2 denotes the amount of increase of the gate electric potential of the amplification transistor QA that corresponds to the second signal charge, and VRD and VT are as given above with respect to equation (1). The value of VS2 may be expressed as the fraction: (second signal charge responsive to incident light)/(gate capacitance).

Since the driving pulse φTS is at a high level in the time interval t14 (i.e., since the second switching transistor QS was turned on), the electric potential VSS2, as expressed by equation (2), is applied across the capacitor CS. The electric potential VSS2 is accumulated in the second signal-storing capacitor CS by the time the driving pulse φTS returns to a low level at the end of the time interval t14 (i.e., at the beginning of the interval t15), thereby turning the second switching transistor off.

In this way, the second signal-storing capacitor CS stores the second output signal VSS2, as expressed by equation (2). Then, the stored first and second output signals VSS1 and VSS2 are input into the difference-value detector XA.

As will be explained in greater detail below, the difference-value detector XA outputs a difference-value signal (digital signal) whose output is at a given logic level, either high (high logic level) or low (low logic level), whenever the magnitude of the voltage difference between the first output signal (analog signal) and the second output signal (analog signal) is larger than a prescribed threshold value.

During the time interval t14, the switching transistors QO1 and QO2 are turned on by the driving pulse φTO which is high. The difference-value signals output from the left and right difference-value detectors XA are thus stored in the difference-value signal-storing capacitors CO1 and CO2, respectively.

At the end of the interval t14 (i.e., at the beginning of the interval t15), the driving pulses φPX1, φTS, and φTO returned to a low level.

As has been explained above, when the driving pulse φPX1 returned to low, the separation transistor QX in each of the picture elements of the first row is turned off, and the picture elements in the first row are separated from the vertical readout lines 2a and 2b. In addition, when the driving pulse φTS returns to low, the second switching transistors QS are turned off.

When the driving pulse φTO returns to a low, the switching transistors QO1 and QO2 are turned off, and the difference-value signal-storing capacitors CO1 and CO2 are thus put into a floating state. The difference-value signals from the difference-value-detection circuits 7 are then held in the difference-value storing-capacitors CO1 and CO2.

During the time interval t15, in addition, the driving pulse φH1 from the horizontal scan circuit 13 is set high for a prescribed period of time, and then returned to low. After the driving pulse φH1 has been returned to low, and after a predetermined interval has passed, the driving pulse φH2 becomes high for a prescribed period of time, and then is returned to low. The driving pulse φRSH is high for a prescribed period beginning after the driving pulse φH1 has been returned to low, and ending before the driving pulse φH2 becomes high. The driving pulse φRSH is also high for a prescribed period beginning after the driving pulse φH2 returns to low.

Whenever the driving pulse φH1 is high, the difference-value signal being held in the difference-value signal-storing capacitor CO1 is read out by the horizontal readout line 12, and is output to the output VO via the output buffer amplifier 15.

When the driving pulse φRSH returns to a high, the horizontal reset transistor QRSH is turned on and the horizontal readout line 12 is reset (initialized). This is needed because, when the voltage signal (i.e., difference-value signal) is read out by the horizontal readout line 12, a portion of the voltage signal (difference-value signal) is held in the parasitic capacitance of the horizontal readout line 12. The horizontal readout line 12 is reset in order to eliminate any electric signal remaining in the horizontal readout line 12. After this electric signal has been eliminated, the driving pulse φRSH is returned to low.

When the driving pulse φH2 is then switched to high, the difference-value signal that is stored in the difference-value signal-storing capacitor CO2 is read out by the horizontal readout line 12 and is output to the output VO via the output buffer amplifier 15. When the driving pulse φRSH returns to high, the horizontal reset transistor QRSH is turned on, and the horizontal readout line 12 is reset (initialized). Then, the driving pulse φRSH is returned to low.

Due to the parasitic capacitance of the horizontal readout line 12, the waveform of the voltage signal (i.e., difference-value signal) that is read out by the horizontal readout line 12 is deformed and requires a certain amount of time to reach a steady state. But, according to this embodiment, the difference-value signal that appears on the horizontal readout line 12 is "binarized" (digitized). Therefore, even if the waveform on horizontal readout line 12 has not reached steady state, if the signal reaches a certain level (i.e., the threshold level of the logic circuit), it can be determined whether the signal is at a logic "high" or a logic "low". Thus, the difference-value signal can be read out at a higher speed.

In the subsequent intervals t20 through t25, the same readout operation that was performed for the picture elements of the first row during the intervals t10 through t15 is repeated for the picture elements of the second row. The difference-value signals of the Nth frame generated from the picture elements of the second row are sequentially output from the output VO.

In the manner explained above, the analog signals that represent the incident light at each of the picture elements in the second or present frame (Nth frame) are compared, respectively, with the analog signals that represent the incident light at each of the picture elements in the first or initial frame ((N-1)th frame). If the magnitude of the voltage difference between the analog signal of the Nth frame and that of the (N-1)th at a position i,j of the matrix exceeds a prescribed value, then the picture element at the i,j position of the matrix outputs a difference-value signal.

By detecting those picture elements at matrix positions i,j in which the magnitude of the voltage difference between the analog signal of the Nth frame and that of the (N-1)th frame exceeds a prescribed value, for all integers i,j (here $1 \geq i \geq 2$ and $1 \geq j \geq 2$), the motion of objects can be detected. By repeating the above-explained operation, the motion of objects can be detected between the next successive two or more frames. (This inventive structure and method may of course be expanded to as large a matrix as necessary for a particular application.)

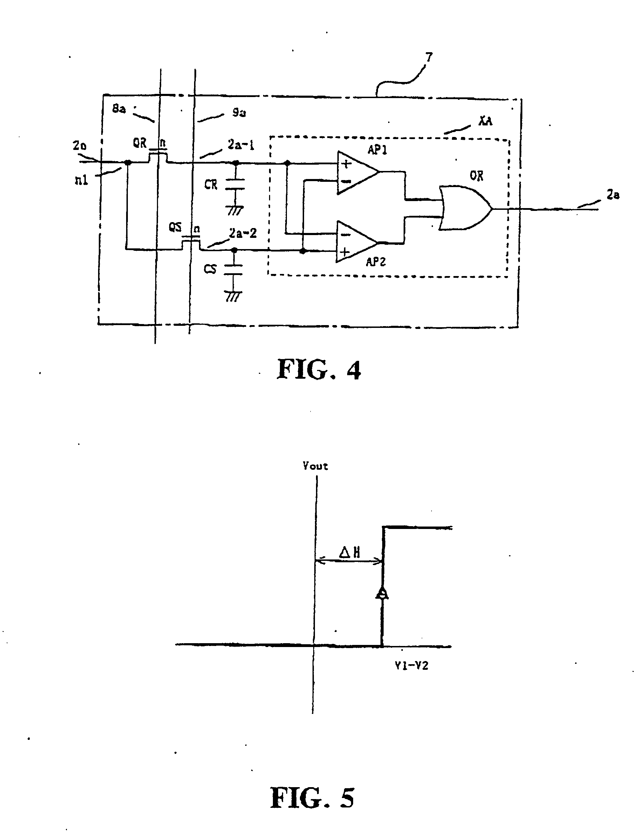

The specific structure of the difference-value-detection circuit 7 is shown in FIG. 4. The difference-value detector XA of the difference-value-detection circuit 7 includes two digital-output comparators AP1 and AP2, and an or-gate OR. The readout line 2a-1 and one terminal of the first signal-storing capacitor CR are connected to a non-inverting input of the comparator AP1. The vertical readout line 2a-2 and one terminal of the second signal-storing capacitor CS are connected to an inverting input of the comparator AP1.

The vertical readout line 2a-2 and one terminal of the second signal-storing capacitor CS are connected to a non-inverting input of the comparator AP2. The vertical readout line 2a-1 and one terminal of the first signal-storing capacitor CR are connected to an inverting input of the comparator AP2.

The outputs of the two comparators AP1 and AP2 are connected to the two inputs of the or-gate OR. The output of the or-gate OR is the output of the difference-value-detection circuit 7.

As explained above in relation to FIG. 3, during time interval t14, the second output-voltage signals VSS2, transferred along the vertical readout lines 2a and 2b, are stored in the second signal-storing capacitor CS via the second switching transistor QS. In the interval t11 as has been explained above, the first output-voltage signals VSS1 have already been stored and held in the first signal-storing capacitors CR. Thus, in a given difference-detection circuit 7, the first output-voltage signal VSS1 is supplied to the non-inverting input of the comparator AP1 and to the inverting input of the comparator AP2, and the second output-voltage signal VSS2 is supplied to the non-inverting input of the comparator AP2 and to the inverting input of the comparator AP1. In the difference-value-detection circuit 7, the magnitude of the voltage of the first output-signal VSS1 and the magnitude of the voltage of the second output-voltage signal VSS2 are thus compared separately in the comparators AP1 and AP2.

As discussed above, the first output-voltage signal VSS1 may be expressed by equation (1), and the second output-voltage signal VSS2 may be expressed by equation (2). Hence, the difference between the voltage of the first output-voltage signal VSS1 and the voltage of the second output-voltage signal VSS2, as obtained from the comparators AP1 and AP2, may be represented by the following equation:

$$VSS1 - VSS2 = (VRD + VS1 - VT)-(VRD + VS2 - VT)$$

$$= VS1-VS2 \qquad (3)$$

Comparing the magnitude of the voltage of the first output-voltage signal VSS1 with the magnitude of the voltage of the second output-voltage signal VSS2 is thus equivalent to detecting a change in the luminance of the incident light of a particular picture element from the (N-1)th frame (corresponding to VS1) to the Nth frame (corresponding to VS2), i.e., the change in luminance between two successive frames.

Both of the comparators AP1 and AP2 output the power-supply voltage (at the logic high) whenever the magnitude of the voltage signal supplied to the respective non-inverting input is larger than that of the voltage signal that is supplied to the respective inverting input. Both also output a ground potential (at the logic low) whenever the magnitude of the voltage signal that is supplied to the respective non-inverting input is less than or equal to that of the voltage signal that is supplied to the respective inverting input.

The output of the comparator AP1 is at the power-supply voltage level (high) whenever the magnitude of the first output-voltage signal VSS1 is larger than the magnitude of the second output-voltage signal VSS2. Conversely, the output of the comparator AP2 is at the power-supply voltage level (high) whenever the magnitude of the second output-voltage signal VSS2 is larger than that of the first output-voltage signal VSS1. Whenever the magnitude of the first output-voltage signal VSS1 is equal to the magnitude of the second output-voltage signal VSS2, the outputs of the comparators AP1 and AP2 are at the ground level (low).

The outputs of the comparators AP1 and AP2 are input to the or-gate OR, which performs a logic summing operation. In this case, the output of the or-gate OR, that is, the output of the difference-value detector XA, becomes high (logic high) only when the magnitude of the first output-voltage signal VSS1 differs from that of the second output-voltage signal VSS2. Whenever the magnitude of the first output-voltage signal VSS1 is equal to that of the second output-voltage signal VSS2, the output of the pr-gate OR, that is, the output of the difference-value detector XA, is at the low level (logic low level).

The value of VT (the gate-source voltage drop) appearing in equations (1) and (2) differs from one amplification transistor QA from another, causing so-called "fixed pattern" noise. However, as has been shown in equation (3), the difference-value signal is not influenced by the value of VT when the difference-value is detected, i.e., when the difference between the magnitude of the first output-voltage signal VSS1 and that of the second output-voltage signal VSS2 is computed. Difference-values (and motion represented by the difference-values) can thus be detected without influence by fixed pattern noise.

The first output-voltage signal VSS1 and the second output-voltage signal VSS2 usually contain random noise components besides the fixed pattern noise component. Therefore, when difference-values are detected, an error (false positive) in motion detection could be generated by such random noise components.

But, according to the present invention, the comparators AP1 and AP2 preferably have a threshold that must be exceeded to trigger a high output. In other words, the outputs of the comparators AP1 and AP2 only go high whenever the difference between the magnitude of the signal voltage that is supplied to the non-inverting input and that of the signal voltage that is supplied to the inverting input exceeds a prescribed threshold voltage. Such a scheme prevents an error signal (a false positive for motion) from being generated due to random noise components.

FIG. 5 shows an example of the input-output characteristics of the digital-output comparators AP1 and AP2 in the difference-value detector XA. In FIG. 5, ΔH represents a threshold voltage, which is set sufficiently larger than the magnitude of the usual random noise component. V1 represents the input voltage value that is supplied to the non-inverting inputs of the comparators AP1 and AP2. V2 represents the input voltage value that is supplied to the inverting inputs of the comparators AP1 and AP2. Vout represents the output-voltage. When the value of (V1 - V2) becomes larger than the threshold voltage ΔH, the output Vout is inverted (from a low level to a high level).

By employing, in the difference-value detector XA, comparators AP1 and AP2 having the above-described characteristics, difference-values (and thus motion of objects) can be detected without generating an error signal due to random noise components. The difference-value detector XA outputs a high signal only whenever the magnitude (absolute value) of the difference between the first output-voltage signal VSS1 and the second output-voltage signal VSS2 (i.e., |VSS1 - VSS2|) is larger than the threshold value ΔH.

Second Example Embodiment

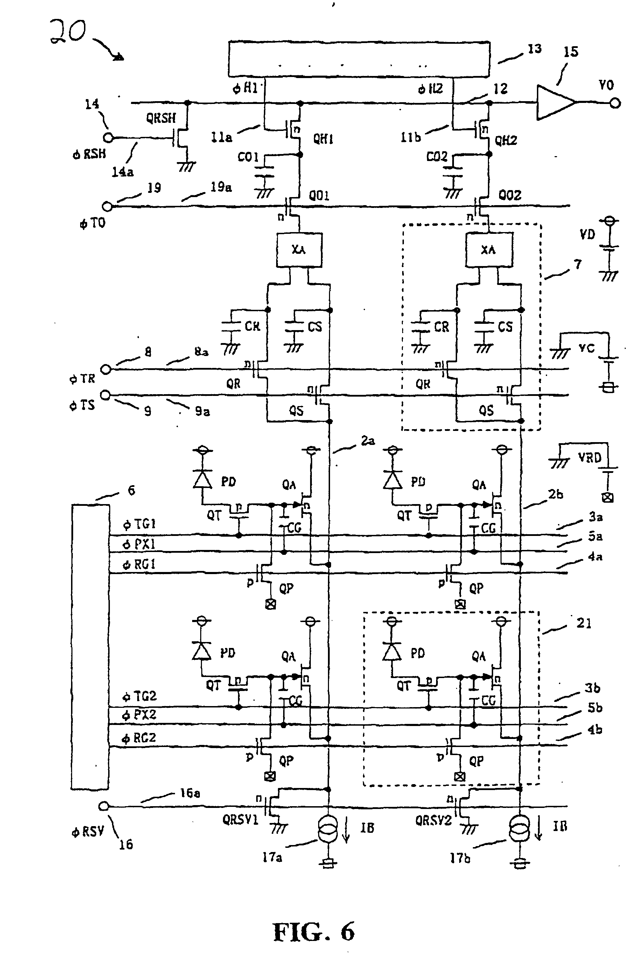

FIG. 6 is a schematic diagram of the circuit structure of a second example embodiment of the present invention. As may be seen from FIG. 6, a motion-detecting solid-state image sensor 20 according to the second example embodiment is identical to the motion-detecting solid-state image sensor 10 according to the first example embodiment shown in FIG. 2, except for the structure of the picture elements 21. Therefore, in FIG. 6, the same reference characters are used for components that are similar or identical to those used in the first example embodiment. These components are substantially as described above with respect to the first example embodiment.

In the motion-detecting solid-state image sensor 20, each of the picture elements 21 includes: (1) a light detector or photoelectric conversion device preferably in the form of a photo-diode PD for generating and storing an electric charge corresponding to an amount of incident light received by the light detector; (2) an amplification transistor (an n-channel JFET) QA for outputting an electric signal that corresponds to the electric charge that has been supplied to its gate; (3) a PMOS transfer transistor QT for directly and selectively transferring the electric charge that has been generated and stored in the photo-diode PD to the gate of the amplification transistor QA; (4) a capacitor CG for supplying the respective driving pulse φPX1, φPX2 from the vertical scan circuit 6 to the gate of the amplification transistor QA by capacitive coupling; and (5) a PMOS reset transistor QP for selectively resetting the electric charge of the gate of the amplification transistor QA.

In each of the picture elements 21, an electrical charge transferred directly to the gate of the amplification transistor QA is stored by that gate, even after the electric charge has been transferred, until the electric charge in the gate is reset. An electric signal that corresponds to the electric charge stored in the gate is produced, by the source-follower operation of the amplification transistor QA, as long as the charge is present on the gate.

As in the first example embodiment, the electric charge is transferred directly to the gate. Thus, in comparison with the case in which the electric charge is transferred via other signal lines or the like, the degree of any deterioration of the signal due to the electric charge distribution during the transfer process is reduced. As a result, the S/N ratio of the motion-detecting solid-state image sensor 20 is improved.

In the motion-detecting solid-state image sensor 20 according to the second example embodiment, whenever the driving pulse φPX1 is transmitted through the clock line 5a, or whenever and the driving pulse φPX2 is transmitted through the clock line 5b, the voltage of the gates of the amplification transistors QA is influenced through the capacitive coupling of the capacitors CG in each of the picture elements 21. The amplification transistor QA in each of the picture elements 21 is turned on (selected) in this manner, as described below.

Whenever the driving pulse φPX1 or φPX2 appears on the clock line 5a or 5b, respectively, the gate of the associated amplification transistors QA are in a floating state. The electric potential of the gates, which gates are capacitance-coupled to the clock lines 5a and 5b through capacitors CG, is thus increased. The amplification transistors QA are turned on (selected) by this increased electric potential of the gates.

On the other hand, if the level of the driving pulse φPX1 or φPX2 is low on the clock line 5a or 5b, respectively, the associated amplification transistors QA are turned off (i.e., not selected) by the resulting decrease in the potential at the gates thereof. In this way, the capacitance-coupled gate shown in FIG. 6 has the same function as the separation transistor QX shown in FIG. 2. Therefore, the motion-detecting solid-state image sensor 20 of FIG. 6 can be operated according to the timing chart shown in FIG. 3, in the same way as the motion-detecting solid-state image sensor 10 shown in FIG. 2.

In the second example embodiment, the gate of the amplification transistor QA may itself serve as a plate of the capacitor CG, thereby facilitating a compact and easily fabricated design for the capacitor CG. The separation transistor QX, shown in FIG. 2, is not needed. Thus the size of each of the 21 can effectively be reduced by the volume that would otherwise be occupied by the picture element separation transistor QX. As a result, the aperture efficiency and the resolution of the image sensor can be improved.

Third Example Embodiment

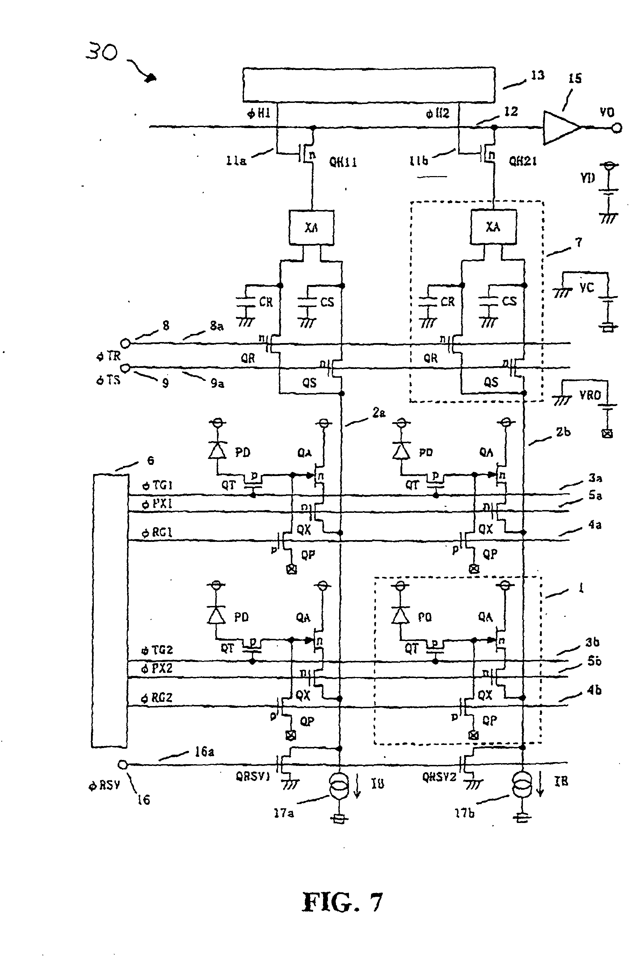

FIG. 7 is a schematic diagram of the circuit structure of a third example embodiment of the present invention. As shown in FIG. 7, a motion-detecting solid-state image sensor 30 according to the third example embodiment of the present invention differs from the motion-detecting solid-state image sensor 10 of FIG. 2 in that the difference-value-detection circuits 7 are connected to the horizontal readout line 12 only via the NMOS horizontal readout transistors QH11 and QH21, and not via any difference-value signal-storage devices such as the difference-value signal-storage capacitors CO1 and CO2 shown in FIG. 2.

In the motion-detecting solid-state image sensor 30, the same reference characters are used for components similar or identical to corresponding components shown in FIG. 2. Such components are substantially as described above in relation to FIG. 2.

In the motion-detecting solid-state image sensor 30, the left and right difference-value-detection circuits 7 are connected to the horizontal readout line 12 via the horizontal readout transistors QH11 and QH21 respectively. The reset transistor QRSH shown in FIG. 2 on the horizontal readout line 12 is thus not necessary.

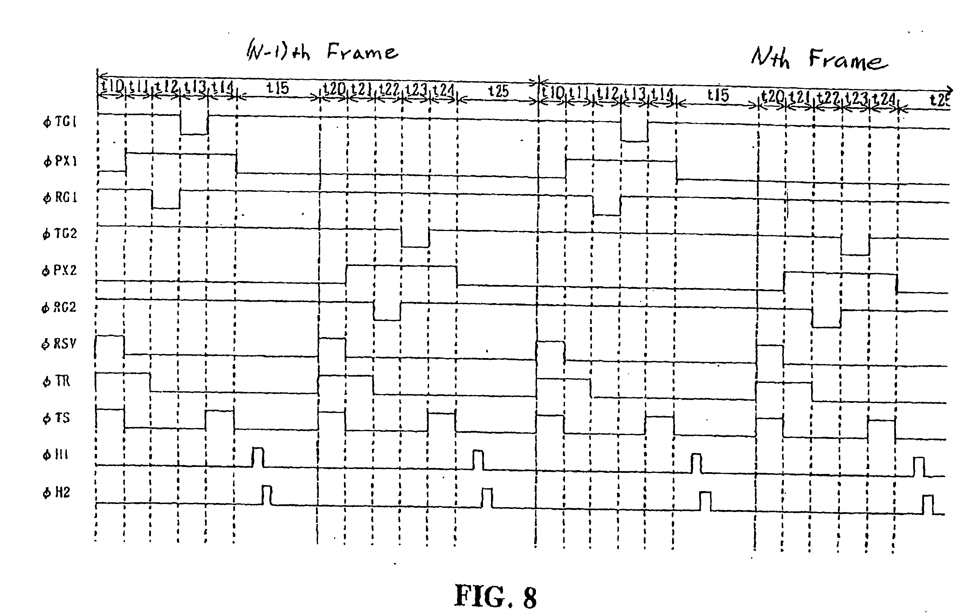

The operation of the motion-detecting solid-state image sensor 30 is illustrated by the timing chart shown in FIG. 8. FIG. 8 shows the readout operation over two successive frames (the (N-1)th frame and the Nth frame). The readout operation in each of the frames is identical. The time intervals t10 through t15 indicate the readout operation of the two picture elements in the first row, and the time interval t20 through t25 indicate the readout operation of the two picture elements in the second row.

The readout operation of the timing chart shown in FIG. 8, over the time intervals t10 through t14 (and t20 through t24) is identical to the readout operation of the timing chart shown in FIG. 3 over the time intervals t10 through t14 (and t20 through t24). The operation of the third example embodiment in these intervals is essentially identical to that of the first example embodiment, as explained above in relation to FIG. 3. The timing chart shown in FIG. 8 differs from that of FIG. 3 in the time interval t15. Accordingly, the time interval t15 of the Nth frame is explained below.

In the Nth frame, by the end of the time interval t14 (at the beginning of the time interval t15), the first output signal VSS1 is stored and held in the first signal-storage capacitor CR, and the second output signal VSS2 is stored and held in the second signal-storage capacitor CS. The first output signal VSS1 and the second output signal VSS2 are then compared in the difference-value-detection circuit 7, and a difference-value signal is output from the difference-value-detection circuit 7.

After the time interval t15 begins, the driving pulse φH1, emitted from the horizontal scan circuit 13, goes high for a prescribed period of time, and then returns to low. Afterward, the driving pulse φH2 goes high for a prescribed period of time, and then returns to low. In this case, the difference-value signal that is emitted from the left difference-value-detection circuit 7 and the difference-value signal that is emitted from the right difference-value-detection circuit 7 are read out sequentially by the horizontal readout line 12 when the driving pulses φH1 and φH2 respectively, are activated. Then, the difference-value signals are sequentially output to the output VO via the output buffer amplifier 15.

As in the first example embodiment, the waveform of the signal that is read out by the horizontal readout line 12 is deformed by the influence of parasitic capacitance of the horizontal readout line 12, and requires a certain amount of time to reach a steady state. However, according to a preferred aspect of the present invention, the electric signal that appears on the horizontal readout line 12 is "binarized" (i.e., converted to a digital signal of high or low-level). Therefore, even if the waveform has not reached a steady state, if the signal reaches a certain level (the threshold level of the logic circuit), it can be determined whether the signal is at the logic high level or logic low level. Thus, the difference-value signal can be read out at. a relatively high speed.

In addition, in the third example embodiment, the orgate OR charges or discharges the parasitic capacitance of the horizontal readout line 12, so that the horizontal readout line 12 will reach a predetermined level (high or low). Therefore, the horizontal readout line 12 does not need to be reset (initialized). As a result, the readout operation may be accelerated.

Fourth Example embodiment

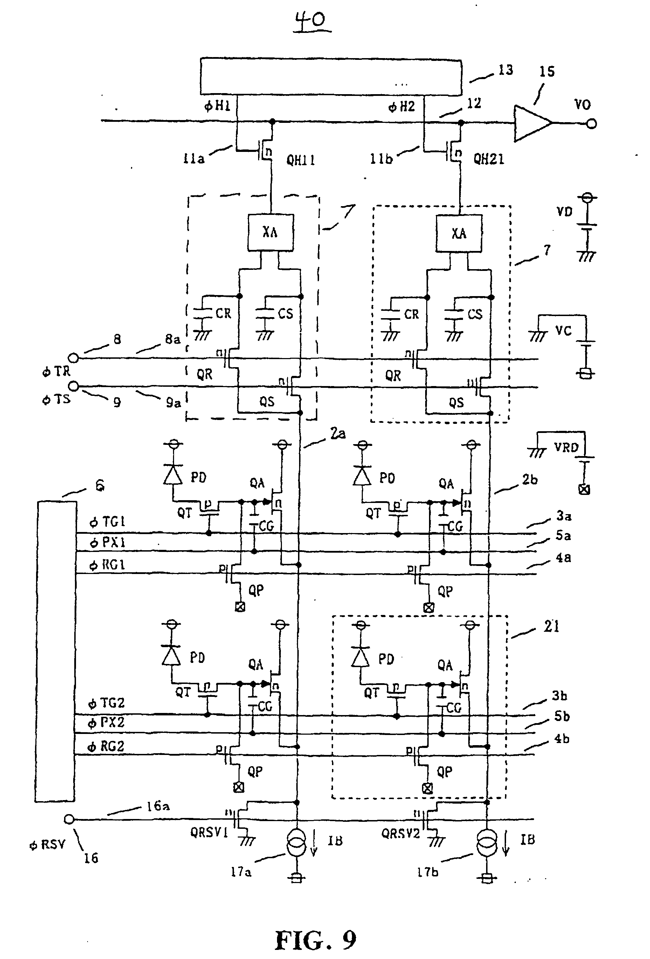

FIG. 9 is a schematic diagram of the circuit structure of a fourth example embodiment of the present invention. As shown in FIG. 9, the motion-detecting solid-state image sensor 40 according to the fourth example embodiment of the present invention differs from the motion-detecting solid-state image sensor 20 according to the second example embodiment, shown in FIG. 6, only in that the left and right difference-value-detection circuits 7, of the FIG.-9 embodiment, are connected to the horizontal readout line 12 only via the NMOS horizontal readout transistors QH11 and QH21, without using difference-value signal-storage devices (e.g., the difference-value signal-storage capacitors CO1 and CO2 in the second example embodiment). In the motion-detecting solid-state image sensor 40, components having the same reference characters as those in FIG. 6 are substantially as described in relation thereto.

The structure of each of the picture elements 21 of the fourth example embodiment, and the method of selecting or de-selecting the amplification transistor QA of each of the picture elements 21, correspond to that described relative to the second example embodiment shown in FIG. 6, and thus differ from the precise structure and methods of the picture elements 1 of the third example embodiment. Nonetheless, the preferred timing of the driving pulses for the fourth example embodiment is identical to that of the third example embodiment. Operation of the motion-detecting solid-state image sensor 40 of the fourth example embodiment is thus identical to that of the motion-detecting solid-state image sensor 30 in the third example embodiment (as shown in the timing chart shown in FIG. 8). In other words, in the fourth example embodiment, it suffices to supply the driving pulse φPX1 and φPX2, which are supplied to the gate of the picture element separation transistor QX of the third embodiment, to the capacitors CG in the first row, and to the capacitors CG in the second row, respectively.

Thus, according to the fourth example embodiment, in each picture element 21, a separation transistor (for example, the transistor QX shown in FIG. 7) is not needed because the capacitor CG capacitatively couples the gate of the amplification transistor QA. Therefore, the size of each of the picture elements 21 can be reduced by the volume that would otherwise be occupied by the separation transistor.

Fifth Example Embodiment

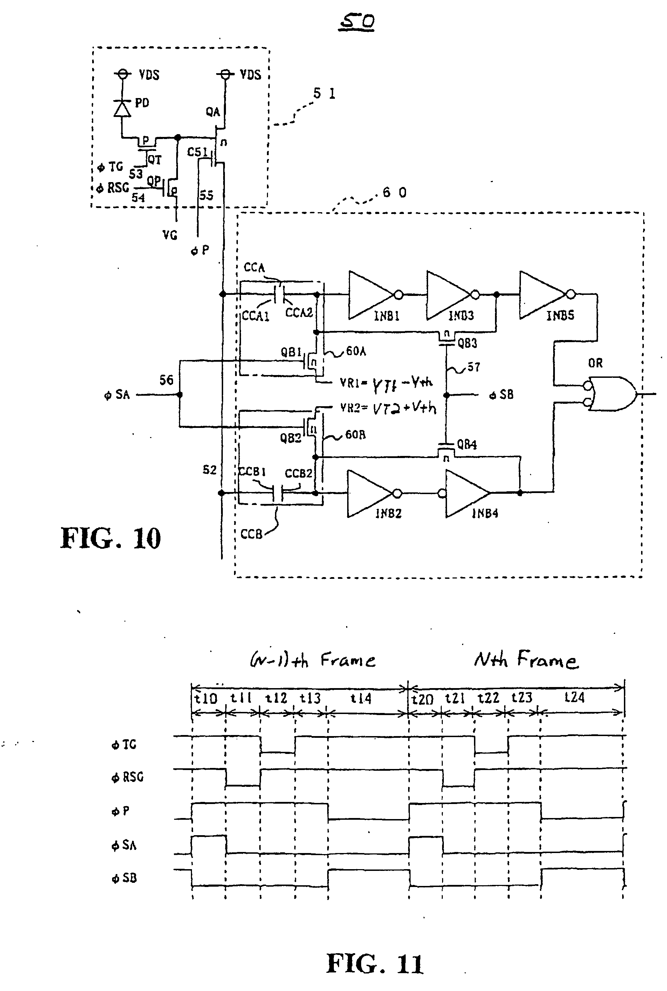

FIG. 10 is a schematic diagram of the circuit structure of a fifth example embodiment of the present invention. The motion-detecting solid-state image sensor 50 according to the fifth example embodiment differs from the motion-detecting solid-state image sensors according to the first through fourth example embodiments mostly in the structure of the difference-value-detection circuit 60.

In FIG. 10, in order to simplify the explanation, only one of the picture elements 51 is shown. As shown in FIG. 10, each of the picture elements 51 includes: (1) a photo-diode PD for generating and storing an electric charge that corresponds to the incident light; (2) an n-channel JFET amplification transistor QA for outputting an electric signal that corresponds to the electric charge that has been supplied to its gate; (3) a PMOS transfer transistor QT for directly and selectively transferring the electric charge that has been generated and stored in the photo-diode PD to the gate of the amplification transistor QA; (4) a capacitor C51 for supplying the driving pulse φP, output from a vertical scan circuit (not shown), to the gate of the amplification transistor QA by capacitative coupling; and (5) *a* PMOS reset transistor QP for selectively resetting the electric charge on the gate of the amplification transistor QA.

In each picture element 51, the gate of the amplification transistor QA and the anode side of the photodiode PD are connected across the source-drain of the transfer transistor QT. The gates of the transfer transistors QT of the picture elements 51 in the same row are connected to a clock line 53. A driving pulse $\phi$TG is transmitted from a vertical scan circuit (not shown) to the clock line 53, activating the transfer transistors QT in the same row in response to the level of the driving pulse $\phi$TG.

A constant-voltage power supply (not shown) is connected to the drain of the reset transistor QP. A predetermined voltage VG, supplied from the power supply, is selectively applied to the gate of the amplification transistor QA of each picture element 51 via the reset transistor QP. The gate of the reset transistor QP is connected to the clock line 54 that is connected to the vertical scan circuit (not shown). The source of the reset transistor QP is shared with the drain of the transfer transistor QT. The gate of the reset transistor QP is activated in response to the level of a driving pulse $\phi$RSG.

The capacitors C51 in the same row are connected to a clock line 55. The amplification transistor QA of each picture element 51 is turned on or off (selected/deselected) in response to the level of the driving pulse $\phi$P that is transmitted from the vertical scan circuit (not shown *in* the drawing) on the clock line 55. A signal corresponding to the electric charge that has been supplied to the gate of the amplification transistor QA, that is, a signal that corresponds to the incident light, is thereby selectively transferred to a vertical readout line 52.

In the picture element 51 structured as explained above, storage of an electric charge in the gate of the amplification transistor QA causes an electric signal corresponding to the electric charge to be emitted from the amplification transistor QA by the source-follower operation of the transistor, the electric signal is produced until the electric charge at the gate is reset.

As in the previous example embodiments, since the electric charge is transferred directly to the gate, in comparison with the case in which the electric charge is transferred via signal lines or the like, the degree of deterioration of the signal due to the electric charge distribution during the transfer process is reduced, and the image S/N ratio of the motion-detecting solid-state image sensor 50 is improved.

A difference-value-detection circuit 60 is connected to the vertical readout line 52. As in the first example embodiment, a difference-value signal-storage capacitor is connected to the output of the difference-value-detection circuit 60, and the storage capacitor is connected, via a switch transistor, to a horizontal readout line (none of which is shown in FIG. 10). The electric signal that has been stored in the difference-value signal-storage capacitor is output in a manner similar to that described above relative to other example embodiments.

As shown in FIG. 10, the difference-value-detection circuit 60 includes two capacitors CCA and CCB, five inverters INB1-INB5, four NMOS switch transistors QB1-QB4, and an or-gate OR.

Of these components, the capacitor CCA and the switch transistor QB1 constitute a first sample-and-hold circuit 60A. The capacitor CCB and the switch transistor QB2 constitute a second sample-and-hold circuit 60B. One of the plates of the capacitor CCA (plate CCA1) and one of the plates of the capacitor CCB (plate CCB1) are connected to the vertical readout line 52.

The other plates of the capacitors CCA and CCB (plates CCA2 and CCB2, respectively) are connected to the inputs of the inverters INB1 and INB2, respectively, and to the drains of the switch transistors QB1 and QB2, respectively. The sources of the switch transistors QB1 and QB2 are connected co constant-voltage sources (not shown), supplying voltages VR1 and VR2, respectively.

A clock line 56 is connected to the gates of the switch transistors QB1 and QB2. A driving pulse $\phi$SA is supplied to each of the gates via the clock line 56. One of the two inputs of the or-gate OR is connected to the output of the inverter INB1 via the inverters INB3 and INB5. The other input of the or-gate OR is connected to the output of the inverter INB2 via the inverter INB4. The output of the inverter INB3 is connected to the input of the inverter INB1, forming a first closed loop. The output of the inverter INB4 is connected to the input of the inverter INB2, forming a second closed loop.

The switch transistor QB3 is positioned on the signal line that connects the output of the inverter INB3 and the input of the inverter INB1. Similarly, the switch transistor QB4 is positioned on the signal line that connects the output of the inverter INB4 and the input of the inverter INB2. A driving pulse $\phi$SB is supplied to the gates of the switch transistors QB3 and QB4 via a clock line 57.

The timing chart shown in FIG. 11 illustrates a preferred operation of the FIG.-10 embodiment shown. In a manner similar to that of FIG. 3, FIG. 11 shows the case in which a picture element 51 detects the incident light in two successive frames (the (N-1)th frame and the Nth frame) and reads out the detection signal. This timing chart also illustrates the operation of the difference-value-detection circuit 60. The part of the operation that relates to the final output of the motion-detecting solid-state image sensor 50 is similar to that of previous embodiments, and will be not treated in detail.

In what follows, the readout operation of a picture element 51 in a first row in the Nth frame will be explained primarily, starting with immediately before the time interval t20 in the Nth frame of the timing chart of FIG. 11.

Immediately before the time interval t20 in the Nth frame (i.e., in the time interval t14 in the (N-1)th frame), the driving pulses φTG, φSB, and φRSG are high, and the driving pulses φP and φSA are low. Accordingly, immediately before the time interval t20, the transfer transistor QT and the reset transistor are off. The gate of the amplification transistor QA is thus in a floating state. However, by the parasitic capacitance effect of the gate, the signal charge that has already been transferred to the gate, i.e., the first or initial signal charge, corresponding to the incident light in the first or initial frame (the (N-1)th frame), is held by the gate. The photo-diode PD is meanwhile generating and storing the second or present signal charge in response to the incident light in the second or present frame (the Nth frame).

As the moment the time interval t20 begins, the driving pulses φP and φSA go from low to high, and the driving pulse φSB goes from high to low.

When the driving pulse φP is high, a voltage signal corresponding to the first or initial signal charge is supplied to one plate CCA1 of the capacitor CCA and to one plate CCB1 of the capacitor CCB by the source-follower operation of the gate of the amplification transistor QA.

When the driving pulse φSA is high, the switch transistors QB1 and QB2 are turned on, whereby constant voltages of values VR1 (= VT1 - Vth) and VR2 (= VT2 + Vth) are supplied to the other plates CCA2 and CCB2 of the capacitors CCA and CCB, respectively. Because the driving pulse φSB is low, the path that connects the output of the inverter INB3 to the input of the inverter INB1, and the path that connects the output of the inverter INB4 to the input of the inverter INB2, are turned off.

The electric potential difference across the capacitor CCA becomes the voltage difference between a first or initial output signal, denoted VA, corresponding to the first or initial signal charge (i.e., the signal charge of the (N-1)th frame) and the constant voltage VR1 (= VT1 - Vth) (VT1 being a first prescribed value). On the other hand, the electric potential difference across the capacitor CCB becomes the difference between the first output signal VA and the constant voltage VR2 (= VT2 + Vth) (VT2 being a second prescribed value).

At the end of the time interval t20 (i.e., at the beginning of the time interval t21), the driving pulses φSA and φRSG go low. When the driving pulse φSA is low, the capacitor CCA still stores the difference between the first output signal VA in the (N-1)th frame and the constant voltage VR1 (= VT1 - Vth), and the capacitor CCB still stores the difference between the first output signal VA in the (N-1)th frame and the constant voltage VR2 (= VT2 + Vth). When the driving pulse φRSG is low, the reset transistor QP is turned on, whereby the electric charge that has been stored at the gate of the amplification transistor QA is eliminated (i.e., reset).

At the end of the time interval t21 (i.e., at the beginning of the time interval t22), the driving pulse φTG goes low, and the driving pulse φRSG returns to high. When the driving pulse φRSG is high, the above-mentioned reset is terminated. When the driving pulse φTG is low, the transfer transistor QT is turned on. Thereby, the second or present signal charge, which has been generated and stored in the photo-diode PD in response to the incident light during the Nth frame, is transferred directly to the gate of the amplification transistor QA via the transfer transistor QT.

At the end of the time interval t22 (i.e., at the beginning of the time interval t23), the driving pulse φTG goes high, the transfer transistor QT is turned off, and transfer of the second or present signal charge to the gate of the amplification transistor QA is complete.

The gate of the amplification transistor QA is thus placed into a floating state again. By the parasitic capacitance effect of the gate, however, the voltage of the gate rises by the amount of the second signal charge, and the voltage of the gate remains at this increased level. Since the driving pulse φP remains high, the amplification transistor QA is still on. A second or present output signal, denoted by VB and corresponding to the second or present signal charge, is thus provided to the vertical readout line 52 by the source-follower operation of the amplification transistor QA. The second output signal VB is transmitted, via the vertical readout line 52, to one plate CCA1 of the capacitor CCA and to one plate CCB1 of the capacitor CCB.

Whenever the second output signal VB is output to one plate CCA1 of the capacitor CCA and to one plate CCB1 of the capacitor CCB, the difference between the first output signal VA and the constant voltage VR1 (= VT1 - Vth) is already stored across the capacitor CCA, and the difference between the first output signal VA and the constant voltage VR2 (= VT2 + Vth) is already stored across the capacitor CCB. The electric potential at the other plate CCA2 of the capacitor CCA thus becomes (VB + VR1 - VA), and the electric potential at the other plate CCB2 of the capacitor CCB thus becomes (VB + VR2 - VA).

If VT1 is the threshold voltage of the inverter INB1, the inverter INB1 outputs a low-level signal whenever the input-side electric potential (presently, VB + VR1 - VA) of the inverter INB1 is larger than VT1 (i.e., when VB + VR1 - VA > VT1). Therefore, the inverter INB1 outputs a low-level signal whenever the voltage of the second output signal VB is larger than VT1 + VA - VR1. VR1 is equal to (VT1 - Vth). The inverter INB1 thus outputs a low-level signal whenever VB has become larger than (VA + Vth), and outputs a high-level signal whenever VB has become smaller than (VA + Vth).

Similarly, if VT2 is the threshold voltage of the inverter INB2, the inverter INB2 outputs a low-level signal whenever the input-side electric potential (in this case, VB + VR2 - VA) of the inverter INB2 has become larger than VT2 (i.e., VB + VR2 - VA > VT2). Therefore, the inverter INB2 outputs a low-level signal whenever the electric voltage signal VB that has been obtained in the present frame has become larger than VT2 + VA - VR2. Since VR2 is (VT2 + Vth), the inverter INB2 outputs a low-level signal whenever VB has become larger than (VA - Vth), and outputs a high level signal when VB has become smaller than (VA - Vth).

The output signal of the inverter INB1 is twice inverted, by the inverters INB3 and INB5, and is then transferred to one input of the or-gate OR. The output signal of the inverter INB2 is inverted by the inverter INB4 and is then transferred to the other input of the or-gate OR.

At the moment time interval t24 starts, the driving pulse φP returns to low, and the driving pulse φSB returns to high. Whenever the driving pulse φP is low, the amplification transistor QA is turned off (de-selected). Whenever the driving pulse φSB is high, the output of the inverter INB3 and the input of the inverter INB1 are connected, and thereby a first closed loop is formed. Also, the output of the inverter INB4 and the input of the inverter INB2 are connected, and thereby a second closed loop is formed. The formation of the closed loop between the inverters INB1 and INB3 fixes the output of the inverter INB1. Similarly, the formation of the closed loop between the inverters INB2 and INB4 fixes output of the inverter INB3.

To summarize, the output of the difference-value-detection circuit 60 (i.e., the output of the or-gate OR) is a logic "high" signal when one of the following two conditions is satisfied:

(1) VB < (VA + Vth), i.e., (VB - VA) > Vth.

(2) VB < (VA - Vth), i.e, (VA - VB) > Vth.

As in other previously described embodiments, in the fifth example embodiment, the difference-value signal that is supplied from the difference-value-detection circuit(s) 60 to a readout line (not shown) is already "binarized" (digitized) by the respective difference-value-detection circuit(s) 60. Therefore, even if the voltage signal does not reach a steady state due to the parasitic capacitance of the readout line, if the voltage signal reaches a certain level (i.e., the threshold level of the logic circuit), it is sufficient to determine whether the signal is at the high logic level or low logic level. Thus, the speed of the voltage signal readout operation can be increased.

Sixth Example Embodiment

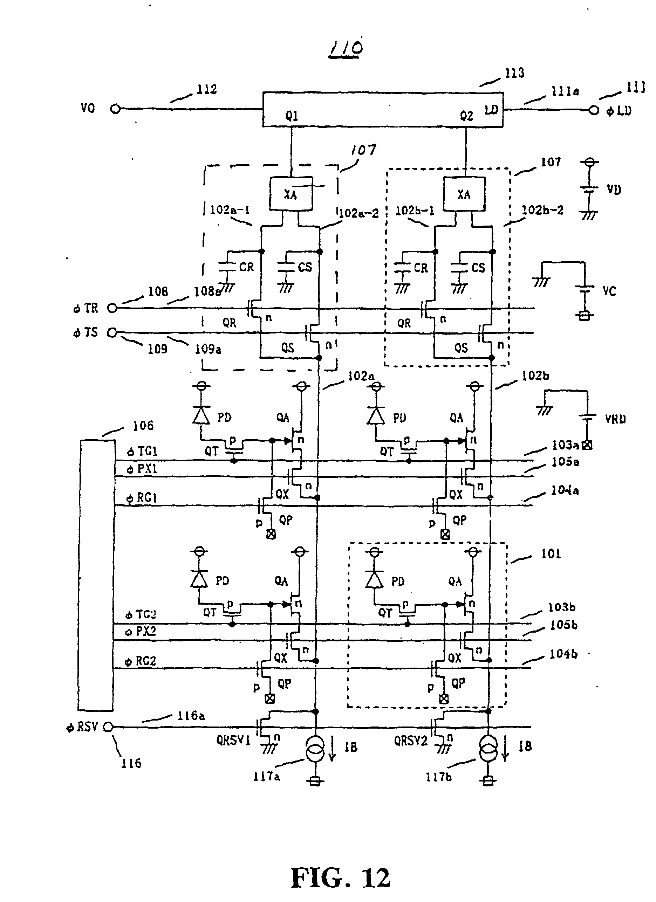

FIG. 12 is a schematic diagram of the circuit structure of a sixth example embodiment of the present invention. The sixth embodiment differs from the first through fifth example embodiments in that a shift register 113 is used as a signal-transfer device. All of the specific structures, interconnections, clock lines, etc. shown below the shift register 113 in FIG. 12 are identical to the corresponding components illustrated in FIGS. 2 and 7 relative to the first and third example embodiments, respectively, and are as described above in relation to FIGS. 2 and 7. (The components in FIG. 12 below the shift register 113 correspond to those in FIGS. 2 and 7 having either identical reference characters or reference numbers that are identical except in the hundreds-place digit.)

In the sixth example embodiment, as in the previous example embodiments, the transfer transistor QT transfers the electric charge, generated and stored in the photo-diode PD, directly to the gate of the amplification transistor QA. By such a structure, in comparison with the case in which the electric charge is transferred via other (metal) signal lines, the degree of deterioration of the signal due to the distribution of the electric charge at the time of transfer is reduced, and the image S/N ratio of the motion-detecting solid-state image sensor 110 can be improved.

The specific structure of the difference-value-detection circuit 107 is identical to that of the difference-value-detection circuit 7 described in relation to FIG. 5 (as employed in the first through fourth example embodiments). The outputs of the difference-value-detection circuits 107 are each connected to a register of a respective corresponding bit of the shift register 113. Difference-value signals transmitted from the difference-value-detection circuits 107 are stored in a corresponding register of the shift register 113. Then, the shift register 113 sequentially transfers the difference-value signals to a horizontal readout line 112, and the difference-value signals are then output from the output VO.

More specifically, the output of the left difference-value-detection circuit 107 that is connected to the first column of the matrix (along the vertical readout line 102a) is connected to a data input Q1 of the first bit register of the shift register 113. Similarly, the output of the right difference-value-detection circuit 107 that is connected to the second column of the matrix (along the vertical readout line 102b) is connected to a data input Q2 of the second bit register of the shift register 113.

The load input LD of the shift register 113 is connected to a node 111 on the side of a driving-pulse-generating circuit (not shown) via the clock line 111a. The shift register 113 stores the electric signals that have been input to the data inputs Q1 and Q2 from the left and right difference-value-detection circuits 107, respectively, in corresponding registers (not shown) in response to the level of a driving pulse φLD that is input to the load input LD.

The output of the shift register 113 is connected to the output VO via the horizontal readout line 112. The horizontal readout line 112 reads out difference-value signals that have been emitted from the left and right difference-value-detection circuits 107. The difference-value signals that are stored in each of the bit registers are sequentially output from the output VO when an appropriate clock pulse is supplied to a clock terminal of the shift register 113 (not shown).

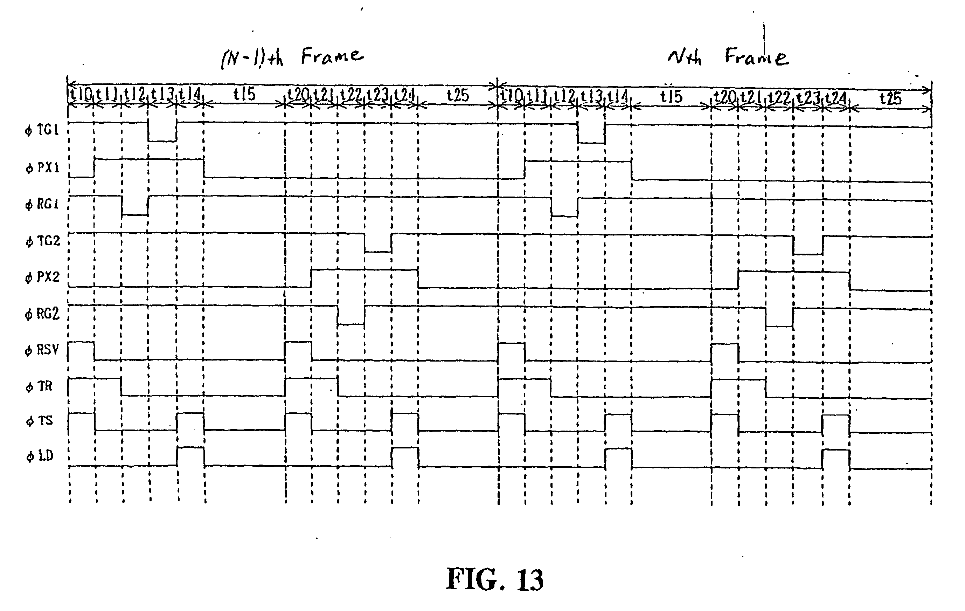

The timing chart shown in FIG. 13 illustrates a preferred operation of the sixth example embodiment of the present invention. The FIG.-13 timing chart is similar to the one associated with the motion-detecting solid-state image sensor 10 according to the first example embodiment, shown in FIG. 3.

The timing chart of FIG. 13 shows the readout operation of the picture elements 101 over two successive frames, an (N-1)th frame (the initial or first frame) and the Nth frame (the present or second frame). The time intervals t10 through t15 indicate the readout operation of the picture elements in the first (top) row. The time intervals t20 through t25 indicate the readout operation of the picture elements in the second row.

The timing and operative effects of the driving pulses φTG1, φPX1, φRG1, φTG2, φPX2, φRG2, φRSV, φTR, and φTS shown in FIG. 13 are essentially as described above with respect to FIG. 3 in relation to the first example embodiment. The present description will accordingly be limited to the timing and operative effects of the timing pulse φLD. As with the prior timing-chart descriptions, the following discussion will focus on the operations related to the picture elements in the first row, during the Nth frame.

During the time intervals t10 through t14, a readout operation is carried out for the picture elements of the first row, substantially as described above with reference to FIG. 3, as regards the actions of the driving pulses listed immediately above. Then, during the time interval t14, the driving pulse φLD goes from low to high. The register of each bit of the shift register 113 thus stores a difference-value signal (digital signal) transmitted from the respective corresponding difference-value detectors XA.

Next, during the time interval t15, the driving pulse φLD is low. Also during the time interval t15, a series of clock pulses (not shown) is input to the shift register 113. The difference-value signals (digital signals) that are held in the register of each bit of the shift register 113 are then sequentially read out by the horizontal readout line 112 and output to the output VO.

During the subsequent time intervals t20 through t25, the same readout operation that is carried out for the picture elements of the first row during the time intervals t10 through t15 is carried out for the picture elements of the second row, and the difference-value signals (digital signals) that have been generated for the picture elements of the second row are sequentially output from the output VO.

According to the sixth example embodiment, as with previous example embodiments, the electric signals (the difference-value signals) that appear on the horizontal readout line 112 are completely "binarized" (i.e., digitized). Therefore, the readout operation can be performed at high speed. Also, since the signals that are read out by the horizontal readout line 112 are digital signals, the signals can be output without being influenced by noise.

Seventh Example Embodiment

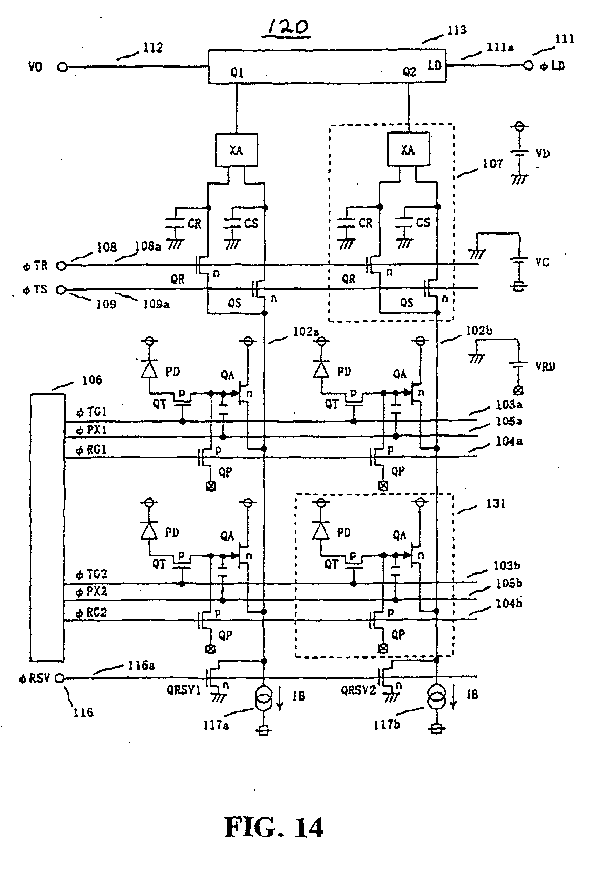

FIG. 14 is a schematic diagram of the circuit structure of a seventh example embodiment of the present invention. A motion-detecting solid-state image sensor 120 according to the seventh example embodiment is identical to the motion-detecting solid-state image sensor 110 according to the sixth example embodiment, except for the structure of each of the picture elements 131. The same reference characters are used for components that are identical to those used in the motion-detecting solid-state image sensor 110 according to the sixth example embodiment.

The structure and operation of each of the picture elements 131 of the motion-detecting solid-state image sensor 120 is identical to that of each of the picture elements 21 of the motion-detecting solid-state image sensor 20 of the second example embodiment, described above in relation co FIG. 6.

In this seventh example embodiment, as in previous example embodiments, the signal charge in each picture element is transferred directly to the gate of the respective amplification transistor. Hence, in comparison with the case in which the electric charge is transferred via other (e.g., metal) signal lines or the like, the degree of deterioration of the signal due to the electric charge distribution during the transfer process is reduced. As a result, the S/N ratio of the motion-detecting solid-state image sensor 120 is improved.

As in the second example embodiment, the gate of each amplification transistor QA is capacitatively coupled with the respective capacitor CG. Thus, the capacitor CG and the gate can be easily formed. A separation transistor QX, such as shown in FIG. 12, is thus not needed in the seventh example embodiment. The size of each of the picture elements 131 can thus be reduced by the volume that would otherwise be occupied by the separation transistor QX. As a result, aperture efficiency and resolution can be improved.

Eighth Example Embodiment

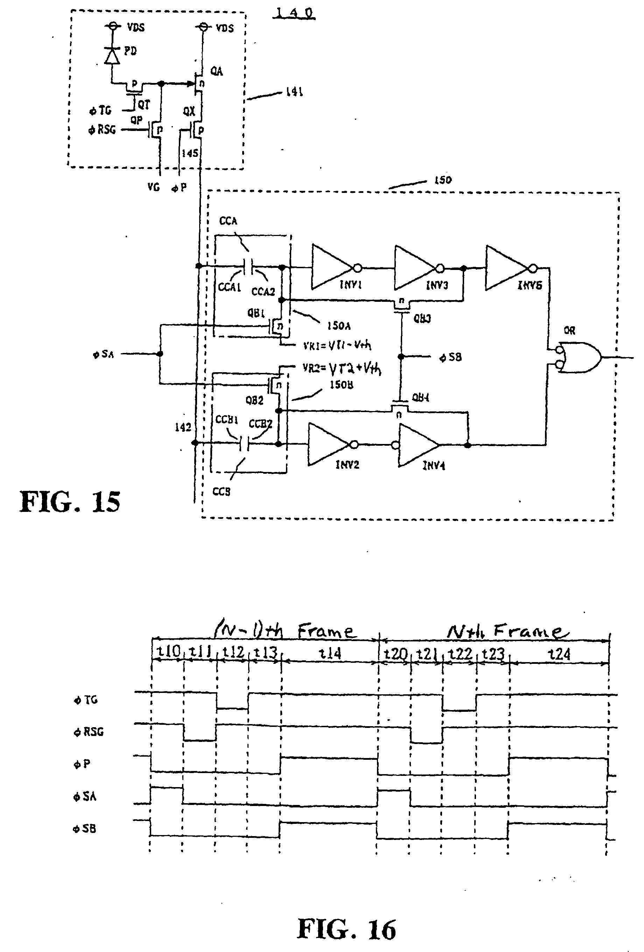

FIG. 15 is a schematic diagram of circuit structure of an eighth example embodiment of the present invention. A motion-detecting solid-state image sensor 140 according to the eighth example embodiment is identical to the motion-detecting solid-state image sensors 110 according to the sixth example embodiment, except for certain structures in each of the picture elements 141, and the structure of the difference-value-detection circuits 150.

For simplicity of illustration, only one picture element 141 is shown in FIG. 15. The picture element 141 differs from the picture element 101 in the sixth example embodiment in that a PMOS (rather than an NMOS) separation transistor QX is used for connecting and disconnecting the source of the amplification transistor QA and the vertical readout line 142. The specific structure of the other components of the picture element 141 and the connection relationship among the components will not be explained in detail since they are equivalent to the picture element 1 of the first and third example embodiments described above.

In the picture element 141, the gate of the separation transistor QX is connected to a clock line 145 that is connected to a vertical scan circuit (not shown). The separation transistor QX is activated in response to the level of a driving pulse φP supplied to the separation transistor QX from a vertical scan circuit (not shown). In the picture element 141, storage of an electric charge in the gate of the amplification transistor QA causes an electric signal corresponding to the stored electric charge to be continuously output until the electric charge in the gate is reset.

As in the previous example embodiments, in this eighth example embodiment, the electric charge representing an amount of incident light is transferred directly to the gate. Hence, in comparison with the case in which the electric charge is transferred via other signal lines or the like, the degree of deterioration of the signal due to the distribution of the electric charge during the transfer process is reduced. As a result, the S/N ratio of the motion-detecting solid-state image sensor 140 is improved.

Though not shown in FIG. 15, the output of the difference-value-detection circuit 150 of FIG. 15 is connected to a data input of a register of a corresponding bit of a shift register, as in the sixth embodiment. Difference-value signals (i.e., signals indicating the voltage difference between the output signal of a given frame and that of the immediately preceding frame) transmitted from the difference-value-detection circuit 150 are stored in the corresponding register of the shift register (not shown) at a prescribed timing, and are sequentially output in response to clock pulses that are input to the shift register.

The structure and operation of the difference-value-detection circuit 150 is the same as that described above for the difference-value-detection circuit 60 of the fifth example embodiment (FIG. 10). (The structure and operation of sample-and-hold circuits 150A, 150B, is also the same as that of sample-and-hold circuits 60A, 60B of the fifth example embodiment.)

The timing chart shown in FIG. 16 illustrates the operation of the motion-detecting solid-state image sensor 140. The operation illustrated in FIG. 16 is the same as that described above relative to FIG. 11, except that the logic values of the driving pulse φP are inverted (since the driving pulse φP is driving a p-channel device in this eighth example embodiment, rather than an n-channel device as in the fifth example embodiment).

In the eighth example embodiment, as in the previous example embodiments, the voltage signals (difference-value signals) that are supplied to a readout line (not shown) are already "binarized" (i.e., digitized) by the difference-value-detection circuit(s) 150. Therefore, the speed with which voltage signals are read out can be increased. Moreover, since the signals that are read out are digital signals, the signals can be output without being influenced by noise.

Ninth Example Embodiment

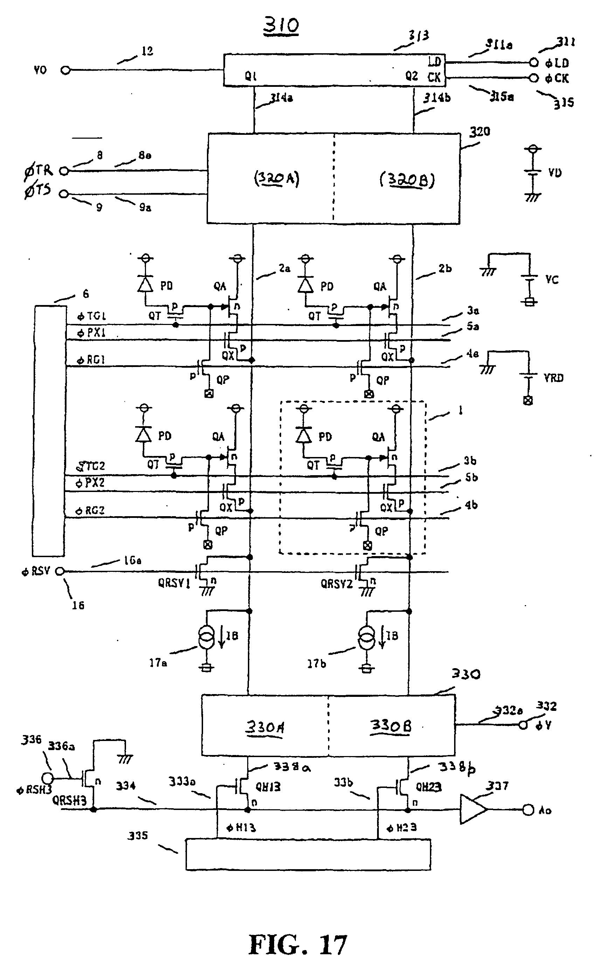

FIG. 17 is a schematic diagram of a ninth example embodiment of the present invention. This embodiment differs from the first eight example embodiments in that the motion-detecting solid-state image sensor 310 can output analog video signals in parallel with binarized motion-detection signals.

For ease of depiction in FIG. 17, only four picture elements (pixels) 1 are shown, arranged in a 2 x 2 matrix. The picture elements 1 and the immediately associated structure, interconnections, clocklines, readout lines, vertical scan circuit, etc., are exactly as described above with respect to like-numbered components of FIG. 2 of the first example embodiment, with one exception: the separation transistors QX of FIG. 17 are PMOS transistors, rather than the NMOS transistors used in the FIG.-2. embodiment

A shift register 313 is connected to the vertical readout lines 2a and 2b via a difference-value-detection circuit 320 which serves as a signal comparator. A horizontal scanning circuit 335 is also connected to the vertical readout lines 2a and 2b via a video signal generator 330.

The difference-value-detection circuit 320 comprises unit circuits 320A and 320B, connected to the vertical readout lines 2a and 2b, respectively. First or initial output signals, corresponding to the incident light in a first or initial frame, are output from a selected row of picture elements 1 to the vertical readout lines 2a and 2b, and stored by the difference-value-detection circuit 320. Second or present output signals, corresponding to incident light in a second or present frame, are then output to the vertical readout lines 2a and 2b from the same selected row. The detection circuit 320 receives the second output signals, compares them with the stored first output signals, and generates differential signals representing the results of the comparison.

The differential signals output from the difference-value-detection circuit 320 are successively transferred to a first horizontal readout line 12 by means of the shift register 313, and are finally output from the output VO.

The video signal generator 330 comprises unit circuits (i.e., video-signal-generating units) 330A and 330B connected to the vertical readout lines 2a and 2b, respectively. When the second or present output signals are output from the selected row of picture elements 1 to the vertical readout lines 2a and 2b, the video signal generator 330 removes dark-current components from those output signals, and outputs the resulting signals as the video signals for the second or present time frame.

The video signals output from the video signal generator 330 are successively transferred to a second horizontal readout line 334 by means of the horizontal scanning circuit 335, and are finally output, from the output Ao, via an output buffer amplifier 337.

Each of the unit circuits 320A and 320B corresponds to one of the columns of the picture-element matrix. The outputs of the unit circuits 320A and 320B are connected to the inputs of the registers of the associated bits (not shown in FIG. 17) which comprise the shift register 313. Each register comprises, for example, a flip-flop circuit.

More particularly, the output of the first unit circuit 320A of the difference-value-detection circuit 320 is supplied to the input terminal Q1 of the first bit register of the shift register 313 through the signal line 314a, while the output of the second unit circuit 320B of the difference-value-detection circuit 320 is supplied to the input terminal Q2 of the second bit register of the shift register 313 through the signal line 314b.

The difference-value-detection circuit 320 is connected to the nodes 8 and 9 of a driving-pulse-generating circuit (not shown) via the clock lines 8a and 9a. The difference-value-detection circuit 320 outputs differential signals, in digital form, when the levels of the driving pulses φTR and φTS emitted from the driving-pulse generating circuit change.

The load signal input terminal LD of the shift register 313 is connected to a node 311 of the driving-pulse-generating circuit via a clock line 311a. The clock signal input terminal CK of the shift register 313 is connected a node 315 of the driving-pulse-generating circuit via a clock line 315a. The output of the shift register 313 is supplied to the output VO via the first horizontal readout line 12.

In the shift register 313, the differential signals supplied from the difference-value-detection circuit 320 to the data input terminals Q1 and Q2 are stored in the associated registers in response to a driving pulse φLD input to the load-signal input terminal LD. Then, the data stored in the associated bits of the registers are shifted by one bit in response to each clock pulse φCK input to the clock-signal input terminal CK, and are successively output via the first horizontal readout line 12 from the output VO.

Thus, the signals output from the shift register 313 are digitized differential signals that have been stored in the registers.

The outputs from the unit circuits 330A and 330B are supplied to the second horizontal readout line 334 via signal lines 338a and 338b and NMOS transistors QH13 and QH23, respectively.

The unit circuits 330A, 330B of the video signal generator 330 are connected in common to a node 332 of a driving-pulse-generating circuit (not shown) via a clock line 332a. The video signal generator 330 outputs analog video signals in response to a driving pulse φV supplied from the driving-pulse-generating circuit via the clock line 332a. These analog video signals are obtained by subtracting the dark-current component from the output signals generated by the picture elements 1 in response to incident light.

When driving pulses φH13 and φH23 are supplied from the horizontal scanning circuit 335 to the gates of the transistors QH13 and QH23 via horizontal-selection signal lines 333a and 333b, respectively, the video signals generated by the video signal generator 330 are transferred to the second horizontal readout line 334 in response to the levels of the driving pulses φH13 and φH23. This operation may be called "horizontal readout control." The video signals supplied to the second horizontal readout line 334 are successively output via the output buffer amplifier 337 from the output Ao.

The drain of the NMOS reset transistor QRSH3, the source of which is grounded, is connected to the second horizontal readout line 334. When a reset driving pulse φRSH3 is supplied from a driving-pulse-generating circuit (not shown) to the gate of the transistor QRSH3 via a clock line 336a, the charge remaining in the second horizontal readout line 334 is removed.

As has been explained, both the difference-value-detection circuit 320 and the video signal generator 330 are provided to the vertical readout lines 2a and 2b. The drains of the NMOS vertical-reset transistors QRSV1 and QRSV2, and the current sources 17a and 17b, are also connected to the vertical readout lines 2a and 2b. The sources of the vertical-reset transistors QRSV1 and QRSV2 are grounded. The supply voltage VC (negative) is applied to the current sources 17a and 17b. When a driving pulse φRSV is supplied from a driving-pulse-generating circuit (not shown) to the gates of the vertical reset transistors QRSV1 and QRSV2 via the node 16 and the clock line 16a, the reset MOS transistors QRSV1 and QRSV are activated, thereby resetting the vertical readout lines 2a, 2b.

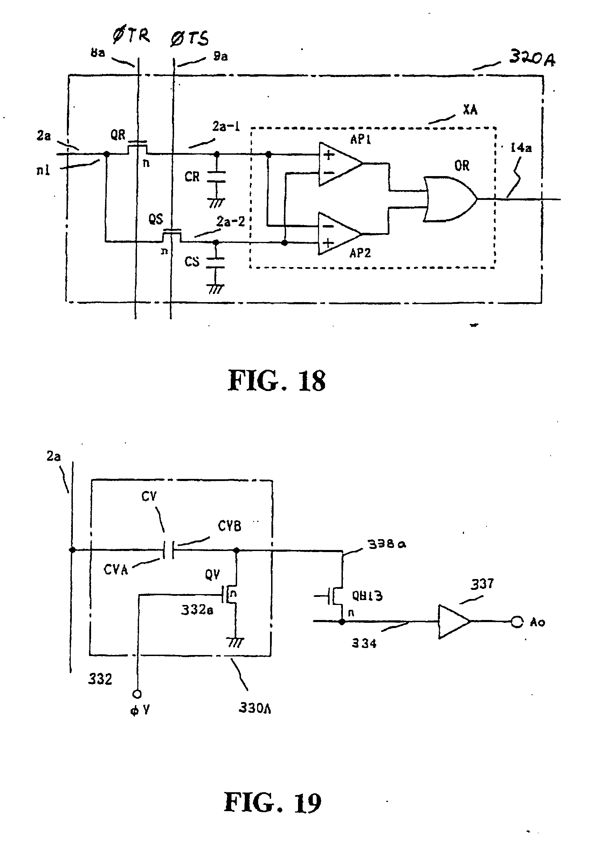

FIG. 18 is a schematic diagram of the unit circuit 320A of the difference-value-detection circuit 320. The structure and operation of the unit circuit 320A is identical to that of the difference-value-detection circuit 7, explained above with respect to FIG. 4 of the first example embodiment.

FIG. 19 is a schematic diagram of the unit circuit 330A of the video signal generator 330. The video signal generator 330 comprises a hold capacitor CV and an NMOS sample-and-hold transistor QV.

One plate CVA of the hold capacitor CV is connected to the vertical readout line 2a, while the other plate CVB is connected to the output of the video signal generator 330 and across the source/drain of the transistor QV to ground. The gate of the transistor QV is connected to the clock line 332a. The output of the video signal generator 330 is connected to the second horizontal readout line 334 via the signal line 338a and the transistor QH13. When a driving pulse φV is supplied to the gate of the sample-and-hold transistor QV via the clock line 332a, an analog video signal is output in response to the pulse.

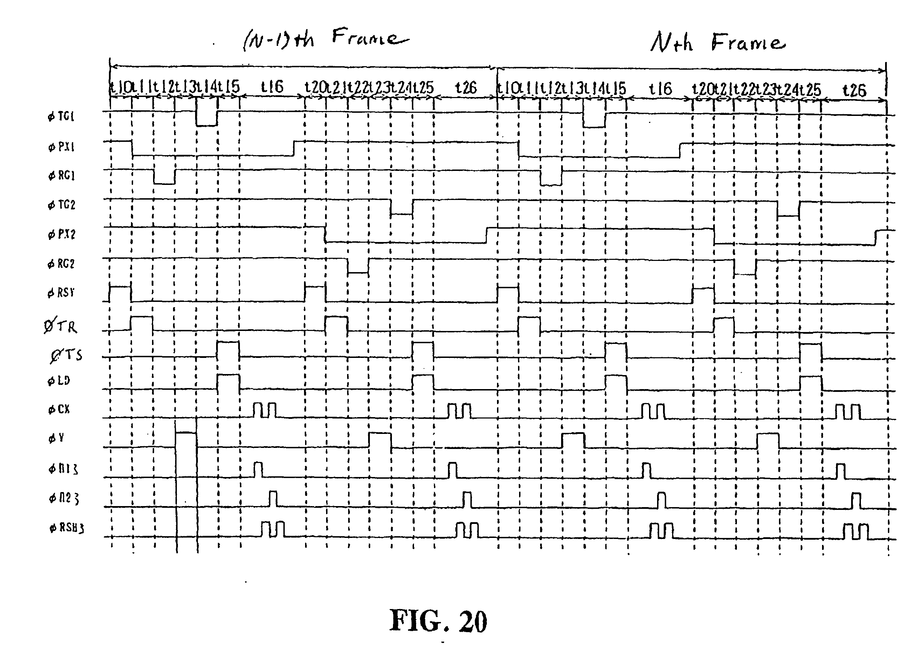

A preferred operation of the ninth example embodiment of the present invention is illustrated in the timing chart in FIG. 20. Two continuous time frames, an (N-1)th frame (i.e., the first or initial frame) and an Nth frame (i.e., the second or present frame) are shown in FIG. 20. The electric charge generated by each picture element corresponding to the incident light is processed, in each frame, according to the various pulses.

The readout operation is the same for all picture elements located in the same row. In FIG. 20, time intervals t10 through t16 of the (N-1)th and the Nth frame denotes the readout operation for the first row of picture elements, while the time intervals t20 through t26 denote the readout operation for the second row of picture elements.

The readout operation for the first row of picture elements in the Nth frame (i.e., the second or present frame), which starts at the beginning of time interval t10 of the Nth frame, will be explained in detail below. (The readout operation in the (N-1)th frame is the same as that in the Nth frame.)

Immediately before the time interval t10 of the Nth frame (at the end of the time interval t26 of the (N-1)th frame), the driving pulses φTG1, φTG2, φPX1, and φPX2 are high. The driving pulses φPG1 and φPG2 are also high. On the other hand, the driving pulses φRSV, φTR, φTS, φLD, and φCK are low. The driving pulses φV, φH13, φH23, and φRSH3 are also low.

Because the driving pulses φTG1 and φTG2 are high immediately before t10, the transfer transistor QT of each picture element 1 of the first row is off. Similarly, because the driving pulses φRG1 and φRG2 are high before t10, the reset transistor QP of each picture element 1 of the first row is off. The gate (i.e., the control region) of the amplification transistor QA is thus in a floating state.

Because of the parasitic capacitance effect, however, the charge that was generated in response to incident light and that was previously transferred directly to the gate during the (N-1)th frame is still held in the gate, even after the transfer transistor was turned off. This charge is referred to as the "first" or "initial" signal charge. Thus the amplification transistor QA outputs a first or initial output signal corresponding to the first or initial signal charge until the gate is reset by removing the accumulated charge.

After the transfer transistor QT is turned off (in the (N-1)th frame), a new charge is generated by the photo-diode, corresponding to the incident light it receives. This charge is referred to as the "second" or "present" signal charge.

Before the start of the time interval t10, because the driving pulses φPX1 and φPX2 are high, the separation transistors QX of both the first and second rows are off. Accordingly, all the picture elements 1 are disconnected from the vertical readout lines 2a and 2b. Because the driving pulse φRSV is low, the reset transistors QRSV1 and QRSV2 are off.

Because the driving pulses φTR and φTS are low, the first and second switching transistors QR and QS in the difference-value-detection circuit 320 are off so as not to supply the electric signals on the vertical readout lines 2a and 2b to the first and second signal-storing capacitors CR and CS (FIG. 18).

The driving pulse φLD is low and, accordingly, no signals are input to the bit registers of the shift register 313.

Then, at the start of the time interval t10, the driving pulse φRSV changes from low to high. In response, the reset transistors QRSV1 and QRSV2 are turned on, and any charges that remain on the vertical readout lines 2a and 2b are removed.

At the start of the time interval t11, the driving pulse φRSV changes from high to low, while the driving pulse φTR becomes high. In response, the reset transistors QRSV1 and QRSV2 are turned off, and the first switching transistor QR is turned on. The other switching transistor QS remains off.

At the start of the time interval t11, the driving pulse φPX1 returns to low. In response, the separation transistors QX of the first row are turned on, and the sources of the amplification transistors QA of this row are connected to the vertical readout lines 2a and 2b (i. e., the transistors QA of the first row are selected). At this time, the gate of each amplification transistor QA of the first row is still holding the first or initial signal charge, which was transferred during the initial frame (at t14 of the (N-1)th frame). A respective first output signal, corresponding to the respective first signal charges, is thus output to each of the vertical readout lines 2a and 2b at the beginning of the time interval t11. The respective first electric signals are then stored in the respective first signal-storing capacitors CR via the first switching transistors QR.

During the time interval t11, the second row of picture elements is still disconnected from the vertical readout lines 2a and 2b because the driving pulse φPX2 is still high, leaving the separation transistors QX in the second row off.

At the beginning of the time interval t12, the driving pulse φTR changes from high to low, and the driving pulse φRG1 returns to low. The level change of the driving pulse φTR causes the first switching transistors QR to be turned off. The first signal capacitor CR is thus in a floating state, and still holds the first or initial output signal.

When the driving pulse φRG1 becomes low at the beginning of t12, each of the reset transistors QP of the first row is turned on, and the source voltage VRD (that is, the readout level) is transferred to the gate of each amplification transietor QA of the first row. In response to the reset transistor QP being turned on, the first signal charge is removed from the gate of the amplification transistor QA and the gate is biased to the source voltage VRD.

At the beginning of t13, the driving pulses φRG1 and φV become high. Because the driving pulse φRG1 is set high, each reset transistor QP of the first row is turned off, and the gate of the associated amplification transistor QA is placed in a floating state. However, because of the parasitic capacitance effect, the gate is kept biased to the source voltage VRD (i.e., the readout level).

Because the driving pulse φV becomes high, the sample-and-hold transistor QV of the video signal generator 330 (FIG. 19) is turned on, and the plate CVB of the hold capacitor CV is grounded. As a result, the potential difference between the plates of the hold capacitor CV becomes equal to the dark output signal VD. (This will be described in more detail below.) The dark output signal VD is accumulated in the hold capacitor CV by the time the driving pulse φV becomes low, turning the sample-and-hold transistor QV off.

At the start of the time interval t14, the driving pulses φV and φTG1 are set to low. In response to the driving pulse φTG1 being low, the transfer transistor QT of each picture element of the first row is turned on, and the respective second or present signal charges, generated by the photo-diodes of the first row in the second or present frame, are transferred directly to the gates of the associated amplifier transistors QA. These second signal charges correspond to the incident light of the Nth (i.e., the second, or present) frame.

When the charges that correspond to the incident light of the Nth frame are transferred to the gates (i.e., the control region) of the amplification transistors QA of the first row, the gate voltages of the transistors QA rise by the respective amounts of the transferred charges. Then, the source voltage of these amplification transistors QA also rises (the same amount as the voltage rise of the gate voltage) by the source-follower operation.

Thus, second output signals, which correspond to the second signal charges, are output to the vertical readout lines 2a and 2b from the amplification transistors QA of the first row. (The separation transistors QX are on during t14.)

At the beginning of the time interval t15, the driving pulses φTG1, φTS, and φLD become high.

In response to the driving pulse φTG1 becoming high, the transfer transistor QT of each picture element 1 of the first row is turned off, thereby completing the signal transfer of each second or present signal charge in the first row. Although the gates of the amplification transistors QA are in a floating state during this period, the rise in gate voltages due to the transferred second or present charges is maintained because of the parasitic capacitance effect until the associated reset transistors QP are turned on and the gates are reset in the (N+1)th frame. (These signal charges are used, before the gates are reset in the (N+1)th frame, as the first or initial signal charges in the (N+1)th frame).

Because the second signal charges are still held by the gate even after the transfer transistor QT is turned off, 5 the amplification transistor QA produces second or present output signals corresponding to the second signal charges.

In response to the level change of the driving pulse φTS, the second switching transistor QS is turned on, and the second output signals from the amplification transistors QA of the first row are supplied to the second signal-storing capacitors CS. (The associated separation transistors QX are also on and connect the amplification transistors QA of the first row to the vertical readout lines 2a and 2b.)

The second signal-storing capacitor CS stores the second output signals, while the first signal-storing capacitor CR stores the first output signals. The value of these signals may be expressed as explained above with respect to equations (1)-(3). These first and second output signals are still in analog form, and they are supplied to the difference-value detector XA.

If the difference between the first analog output signal and the second analog output signal exceeds a predetermined value, the difference-value detector XA outputs a logic high value. Alternatively, the difference-value detector XA may be configured so as to output a logic low value when the difference exceeds the threshold value. Thus, the digital output of the difference-value detector XA represents the magnitude of the voltage difference between the first and second output signals. This digital output of the difference-value detector XA is referred to as a "differential signal."

Since the driving pulse φLD is high during the time interval t15, the digital differential signals are input to the respective bit registers of the shift register 13 through the data-input terminals Q1 and Q2.

At t16, the driving pulses φLD and φTS are returned to low and, accordingly, the second switching transistor QS is turned off.

During the time interval t16, the levels of the driving pulses φH13 and φH23 rise successively for a predetermined period of time, causing the horizontal readout MOS transistors QH13 and QH23 to be turned on successively.

When the horizontal readout MOS transistor QH13 and QH23 are turned on, the video signals generated by the video signal generator 330 are transferred to the second horizontal readout line 334.

The level of the reset driving pulse φRSH3 is also raised a predetermined number of times at a predetermined timing during the time interval t16. In response to the high pulses, the horizontal reset transistor QRSH3 is turned on, and the charges remaining on the second horizontal readout line 334 are removed.

At the end of the time interval t16 (i.e., immediately before t20), the driving pulse φPX1 becomes high, and the picture elements 1 of the first row are disconnected from the vertical readout lines 2a and 2b.

At t20, the driving pulse φRSV becomes high, and the vertical readout lines 2a and 2b are reset.

Before t20, when the clock pulse φCK is input to the shift register 313 during t16, the digital differential signals stored in the associated bit registers are successively read out by the first horizontal readout line 12, and are output from the output VO.

Thus, in this embodiment, the differential signals on the first horizontal readout line 12 are in digital form. This allows high-speed readout and output while preventing the adverse effects of noise.

In the subsequent time intervals t20 through t26, the same operation is performed for the second picture element row as was performed for the first row during the time intervals t10 through t16, and digital differential signals that represent the difference between the incident light levels of the (N-1)th frame and the Nth frame in the second picture element row are successively output from the output VO.

The differential signal is the digital result of the comparison of analog signals of two continous time frames (e.g., the (N-1)th and Nth frames) for each picture element. If the differential signal has a value of logic high, this indicates that the incident light level of the associated picture element has changed over the two continuous time frames by an amount exceeding the threshold value. This means, in turn, that the object being detected moved over these time frames. Thus, by determining those picture elements exhibiting a change in luminance of magnitude greater than the threshold value, the motion of an object can be detected. By repeating the operations described above over successive time frames, motion can be continuously monitored.

The operation of the unit circuit 320A of FIG. 18 is essentially the same as that of the difference-value-detection circuit 7, described above with reference to FIG. 4, and equations (1)-(3) relative to the first example embodiment. Accordingly, that description will not be repeated here.

As described above with respect to difference-value-detection circuit 7 of FIG. 4, the comparators AP1 and AP2 of the unit circuit 320A are designed so that their outputs are inverted only when the difference between the signal voltages input to the non-inverse terminal and inverse terminal exceeds a predetermined threshold value. A response curve of the input/output characteristics of such a comparator is given in FIG. 5 above. The effect of such response, as discussed above with reference to FIG. 5, is to reduce or eliminate the effects of random noise.

The operation of the video signal generator 330 during the time intervals t10 through t16 of the Nth frame (for the first picture element row) is explained below with reference to FIG. 20.

Immediately before t10 of the Nth frame (at the end of t26 of the (N-1)th frame), the driving pulses φPX1, φPX2, φTG1, and φRG1 are kept high, while the driving pulse φV is low. In particular, the driving pulse φPX2 is kept high until the time interval t21. Accordingly, the picture elements 1 of the second row are disconnected from the vertical readout lines 2a and 2b during the time intervals t10 through t16. In other words, the second picture element row is not selected during this period of time.

Because the driving pulse φTG1 is high immediately before t10, the transfer transistor QT of each picture element 1 of the first row is off. Similarly, because the driving pulse φRG1 is high before t10, the reset transistor QP of each picture element 1 of the first row is also off.

At the same time, the gate of the amplification transistor QA is in a floating state. Because of the parasitic capacitance effect, however, the voltage that corresponds to the first or initial signal charges previously transferred to the gate of the amplification transistor QA (corresponding to the incident light of the initial or first frame) is still present on the gate, even after the transfer transistor QT is turned off.

Meanwhile, the photo-diodes PD of the first row generate the second or present signal charges in response to the incident light in the second or present frame.

At the beginning of the time period t11, the driving pulse φPX1 becomes low. A first output signal, corresponding to the first signal charge of the first or initial (i.e., the (N-1)th) frame, is thus output to the respective vertical readout line 2a (or 2b) by the source-follower action of that transistor QA.

At the beginning of the time period t12, the driving pulse φRG1 becomes low, and each reset transistor QP of the first row is turned on. The first signal charge is thus removed from the gate of the amplification transistors QA. (This is the "reset" operation.)

At the beginning of the time interval t13, the driving pulse φRG1 returns to high. At the same time, the driving pulse φV also becomes high. In response to the change in the driving pulse φRG1, the reset operation is completed. Although the gate of the amplification transistor QA is thus in a floating state, the biased state of the gate (to the reset voltage) is maintained, because of the parasitic capacitance effect. The dark output signal VD corresponding to the biased state is supplied to one plate CVA of the hold capacitor CV by the source-follower action of the amplification transistor QA.

At the same time, because the driving pulse φV is high, the sample-and-hold transistor QV of the video signal generator 330A (Fig. 19) is turned on, and the other place CVB of the hold capacitor CV is grounded. As a result, the potential difference between the plates of the hold capacitor CV becomes equal to the dark-output signal VD.

At the beginning of t14, the driving pulses φV and φTG1 are set low. The dark-output signal VD has been accumulated in the hold capacitor CV by the time the driving pulse φV becomes low, turning the sample-and-hold transistor QV off. In response to the change in the driving pulse φTG1, the transfer transistor QT of each picture element of the first row is turned on, and the second or present signal charges are transferred directly to the gates of the associated amplifier transistors QA.

Each amplification transistor QA then performs its source-follower action, whereby a second output signal, corresponding to the second signal charge, is output to the respective vertical readout line 2a (or 2b).

At the beginning of the time interval t15, the driving pulse φTG1 becomes high, and the transfer transistors QT of the first row are turned off. At such an instant, signal transfer for the second signal charges of the first row is completed.

The second output signal, denoted VB, corresponding to the second signal charge still held by the gate, is output from the amplification transistor QA by its source-follower action to one plate CVA of the hold capacitor CV. By this point in time, the dark-output components VD for the second or present frame have already been accumulated on the plates of the hold capacitor CV. Therefore, when the second output signal VB for the Nth frame is supplied to the plate CVA of the hold capacitor CV, the potential of the other plate CVB of the hold capacitor CV becomes (VB - VD).

The second output signal VB is the sum of the dark-output component VD and the voltage rise (which may be referred to as an optical signal or a video signal VS) in the gate potential of the amplification transistor QA, due to the transferred charges of the second or present frame.

$$VB = VD + VS \qquad (4)$$

Accordingly, when the amplification transistor QA takes the source follower action in the time interval t15, the output of the video signal generator 30 becomes

$$(VB - VD) = (VD + VS - VD) = VS \qquad (5)$$

Thus, the optical signal (or video signal) VS can be obtained without any dark current or other components.

The respective dark-output signals VD contain both (1) fluctuations in the gate/source voltage among the amplification transistors QA which cause fixed pattern noise, and (2) reset noise which arises immediately after the gate of the amplification transistor QA is reset and causes random noise. In this ninth example embodiment, the video signal generator 30 removes the dark-output components in advance, and outputs a differential video signal, thereby preventing or reducing the fixed-pattern noise and the random reset noise.

By application of the steps described above, differential signals representing the motion of objects, and video signals, are simultaneously generated by the solid-state image sensor of the present invention.

Further, each picture element 1 preferably comprises a buried photo-diode PD, having an npnp-type vertical overflow structure. In this structure, there are a p-layer and an n-layer between the n-type (n+) silicon top layer and the p-type (p-) silicon substrate. The top three layers (npn) in this structure constitute a buried photo-diode, and the bottom three layers (pnp) constitute an overflow structure.

This npnp-type structure can efficiently reduce blur, such as bloom or smear. In addition, this structure prevents the barrier layer, which is produced at the pn junction, from reaching the surface, whereby dark current can be suppressed, and charges do not remain in the photo-diode after signal transfer. Consequently, ideal imaging characteristics can be achieved while preventing afterimage and reset noise.

As a significant feature of the motion-detecting solid-state image sensor 310 of the ninth example embodiment, differential signals and video signals are simultaneously output. These two kinds of signals can be selectively, or simultaneously, displayed on a display screen.

Image-processing using such a motion-detecting solid-state image sensor can be applied to a wide range of industrial fields. For example, the motion-detecting solid-state image sensor 310 can be used in a monitor system. A display (e.g., a CRT) may be connected to the solid-state image sensor 310 to display the motion of a moving body based on the differential signals, while the video signals may be recorded by the recording apparatus. In this example, only the moving body would be monitored in the normal mode, and the video signals could be reproduced, to output the entire image, as necessary.

In another example application, when monitoring people (moving bodies) on a busy street in the daytime with a monitor system using the solid-state image sensor 310 of the present invention, analog images can be displayed on a monitor screen based on analog video signals. When monitoring the same location at night, binary images can be produced based on the differential (i.e., binary) signals.

It is not necessary to change the pulse-driving timing of the motion-detecting solid-state image sensor 310 in order to switch the analog video images and the binary images, because both the video signals and the differential signals are always output. Thus, moving bodies are efficiently monitored using either or both the analog images and the binary images, depending on the situation.

Analog image monitoring and binary image monitoring can be automatically switched also, using, for example, a timer. Alternatively, the digital image monitoring mode can be automatically switched to video-image-monitoring mode when the change of the binary (differential) signals exceeds a predetermined level, and the video-image-monitoring mode may automatically return to the binary-image-monitoring mode when the change of the binary signals returns below the predetermined level.

Tenth Example Embodiment

As a tenth example embodiment, the difference detection circuit 320 of the ninth example embodiment of FIG. 17 may be modified by substituting the difference-value-detection circuit 150, discussed above relative to the eighth example embodiment (FIG. 15) for the unit circuits of the difference-detection circuit 320.

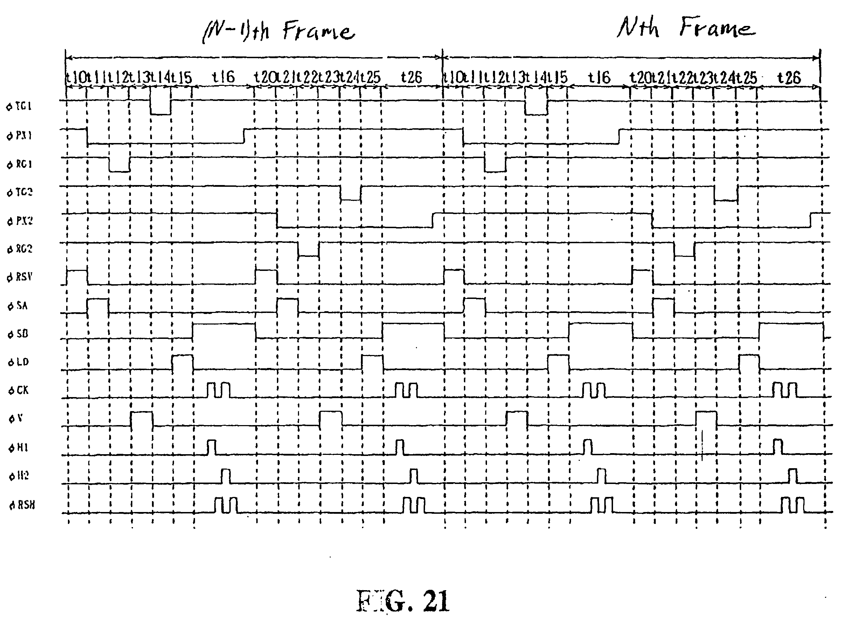

FIG. 21 is a timing chart showing the preferred operation of a motion-detecting solid-state image sensor 310 as in FIG. 17, but employing a difference-detection circuit identical to the difference detection circuit 150 of FIG. 15. FIG. 21 is identical to FIG. 20, except for the driving pulses $\phi$SA and $\phi$SB, that drive the operation of the unit circuits in the form of the difference detection circuit 150. Only a brief explanation of operation directly related to the driving pulses $\phi$SA and $\phi$SB is given below. A fuller explanation of the operation of the difference detection circuit 150 is provided above with respect to the eighth example embodiment.

As may be seen in FIG. 21, immediately before the time interval t10 of the Nth frame, the driving pulse $\phi$SA is low, while the driving pulse $\phi$SB is high. At the beginning of the time interval t10, the driving pulse $\phi$SB becomes low, thus "unfixing" the outputs of the inverters INV1 and INV2 in the difference detection circuit 150.

At the beginning of the time interval t11, the driving pulse $\phi$SA becomes high, turning on the transistors QB1 and QB2 and supplying the plates CCA2 and CCB2 with constant voltages VR1 and VR2, respectively.

Because the first output signal VA is also supplied to the capacitors CCA and CCB during the time interval t11 (via an associated vertical line 2a of FIG. 17, corresponding to the line 142 of FIG. 15), the potential across the plates of CCA becomes (VA - VR1), while the potential difference across the plates of the capacitor CCB becomes (VA - VR2).

At the beginning of the time interval t12, the driving pulse $\phi$SA is returned to low, turning off the transistors QB1 and QB2 and placing the plates CCA2 and CCB2 in a floating state. Both driving pulses $\phi$SA and $\phi$SB remain low through the end of the time interval t15.

During the time interval t15, the second output signal VB is provided to the capacitors CCA and CCB, again via the associated vertical readout line. When the second output signal VB is supplied to one plate CCA1 of the capacitor CCA, the potential of the other plate CCA2 of the capacitor CCA becomes (VB + VR1 - VA). Similarly, when the second signal VB is supplied to one plate CCB1 of the capacitor CCB, the potential of the other plate CCB2 of the capacitor CCB becomes (VB + VR2 - VA).

As described above with respect to the fifth and eighth example embodiments, and assuming VR1 is set to VT1 - Vth, and VR2 is set to VT2 - Vth, where VT1 is the threshold voltage of the inverter INV1 and VT2 is the threshold voltage of the inverter INV2, the difference-detection circuit outputs a logic high if and only if the second output signal VB differs from the first output signal VA by more than Vth.

At the beginning of the time interval t16, the driving pulse $\phi$SB becomes high, and remains high throughout the time interval t16. This fixes the outputs of the inverters INV1 and INV2, thereby fixing the output of the difference-detection circuit 150 during the time interval t16 so that the output of the difference detection circuit may be reliably read out.

As in the ninth example embodiment, differential signals and video signals are simultaneously generated in every frame. Such signals can be selectively displayed on a monitor screen. Accordingly, the image sensor using the difference-value-detection circuit 150 can be applied to various fields associated with image-processing.

In the ninth and tenth example embodiments described above, the separating transistors QX are used to connect and disconnect the picture elements 1 of a selected row to and from the vertical readout lines 2a and 2b. As an alternative, one plate of a capacitor can be connected to the gate of the amplification transistor QA of each picture element 1, while the voltage applied to the other plate can be controlled in order to connect and disconnect the picture element 1. This is similar to the scheme described above with reference to the second, fourth, fifth, and seventh example embodiments.

Eleventh Example Embodiment

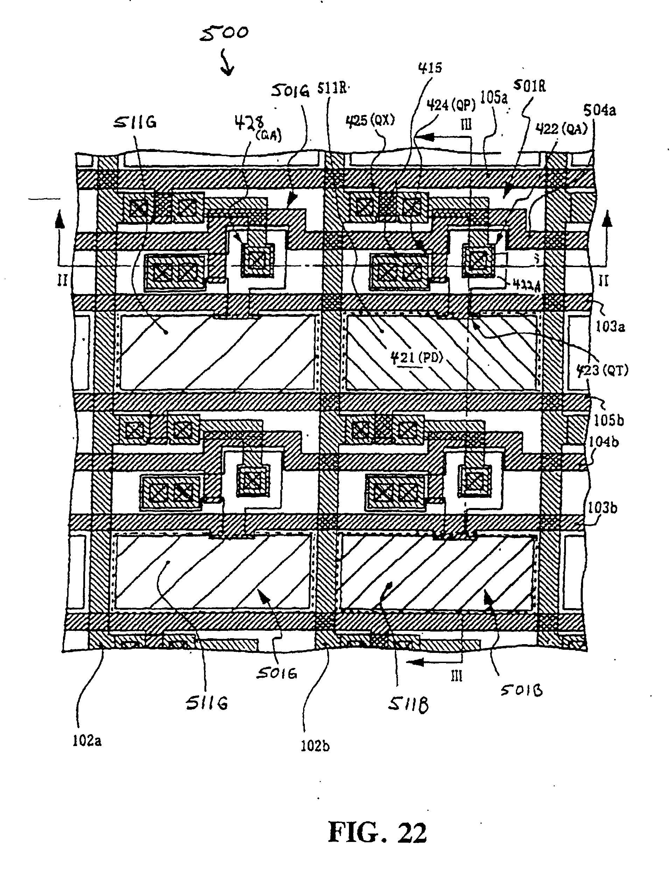

FIGS. 22-24 illustrate the device structure of a light-receiving unit (picture element or pixel) of a motion-detecting solid-state image sensor 500 according to an eleventh example embodiment of the present invention.

In this embodiment, the motion-detecting solid-state image sensor 500 has a red-green-blue (an "RGB") surface color system. Three types of pixels (i.e., red pixels 501R, green pixels 501G, and blue pixels 501B) that constitute the RGB surface color system are arranged in a predetermined pattern in the pixel matrix. For ease of depiction, FIG. 22 shows only four pixels 501G, 501G, 501R, and 501B.

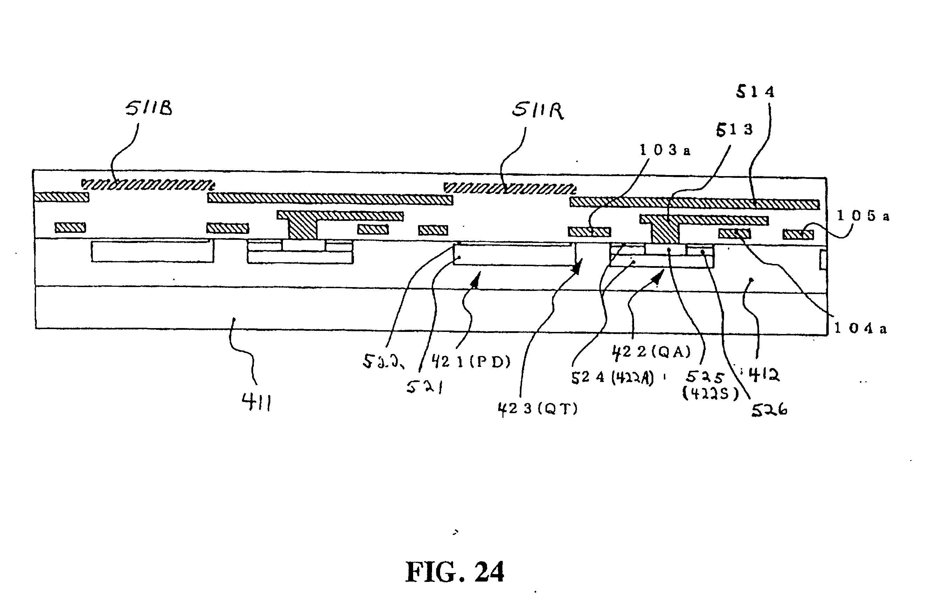

In FIG. 22, there are two green pixels 501G in the left column, a red pixel 501R on the top right, and a blue pixel 501B on the bottom right. Green transmissive filters 511G are positioned over the incident surfaces of the green pixels 501G, a red transmissive filter 511R is positioned over the incident surface of the red pixel 501R, and a blue transmissive filter 511B is positioned over the incident surface of the blue pixel 501B. The red filter 511R and the blue filter 511B are shown in FIG. 24 near the top surface. Each pixel has the same structure except for the color filter 511 used with the pixel. Accordingly, the device structure will be explained using the red pixel 501R (positioned on the top right of FIG. 22) as a representative example.

As shown in FIGS. 22-24, the pixel 501 (the red pixel 501R in this example) of the motion-detecting solid-state image sensor 500 comprises a photo-diode (denoted by symbol PD) 421, which serves as a photoelectric converter to generate and accumulate charges corresponding to amounts of incident light. The generated charge is supplied to the gate 422A of a junction field effect transistor (JFET) 422 (also denoted as an amplification transistor QA). The JFET 422 outputs an electric signal (Vout) corresponding to the charge supplied to its gate 422A. A PMOS transfer transistor 423 (denoted by QT) transfers the charge generated by the photo-diode PD to the gate 422A. A PMOS reset transistor 424 (denoted by QP) resets the charge of the gate 422A via the reset drain 415. A pixel separation transistor 425 (denoted by QX) is provided between the amplification transistor QA and the associated vertical readout line 102a (or 102b), in order to selectively connect a source 422S of the JFET 422 to the vertical readout line 102b.

As shown in FIG. 24, the photo-diode 421 has a P-type impurity diffusion layer (i.e., a charge-accumulation region) 521 formed on an N-type semiconductor layer 412, and a high-density N-type impurity-diffusion layer 522 formed on the P-type impurity-diffusion layer 521.

In the photo-diode 421, a signal charge generated corresponding to the incident light is accumulated in the P-type impurity-diffusion layer (i.e., the charge-accumulation region) 521.

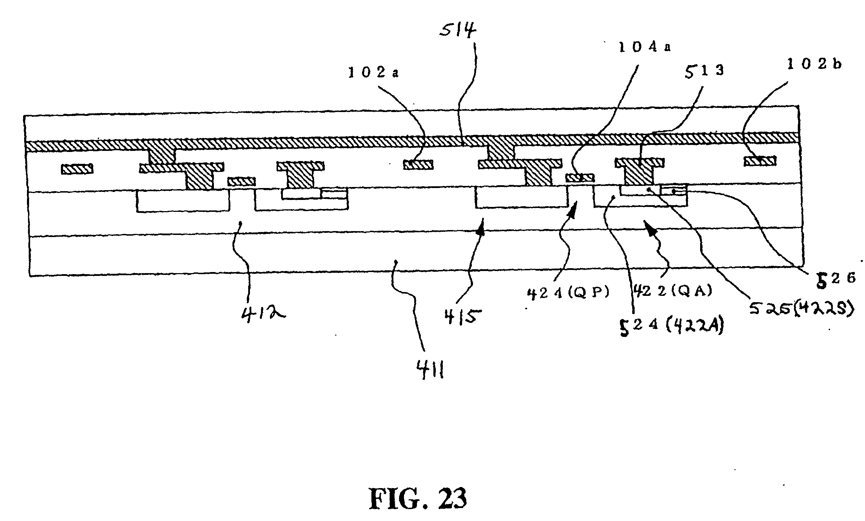

In the JFET 422, as shown in FIGS. 23 and 24, a P-type impurity-diffusion layer 524, formed on the N-type semiconductor layer 412, forms the gate 422A; an N-type impurity-diffusion layer 525 forms the source 422S; an N-type impurity-diffusion layer 526 forms the channel, and the N-type semiconductor layer 412 forms the drain.

The signal charge generated by the photo-diode 421 is supplied to the gate 422A of the JFET 422 via the PMOS transfer transistor 423, and an electric signal Vout that corresponds to the supplied signal charge is output from the source 422S of the JFET 422.

The channel 526 is situated between portions of the gate 422A such that the top and bottom faces of the channel 526 are covered with the gate 422A. Such a structure increases the gain of the source-follower action and, at the same time, reduces variations in the gain.

The reset transistor 424 resets the charge accumulated in the gate 422A of the JFET 422 by making the potential of the gate 422A equal to that of the reset drain 415. In other words, the gate 422A is thus set to the readout level VRD.

The red filter 511R of the red pixel 501R is situated above the photo-diode 421 in order to allow the photo-diode 421 to generate a signal charge corresponding to the intensity of the corresponding color component (i.e., red in this case) of the incident light.

In FIGS. 22 through 24, an interconnection 513 connects the source 422S of the JFET 422 with the main electrode of the pixel-separation transistor QX. A reset drain interconnection 514 connects the reset drains to a supply voltage VRD. Each of the vertical readout lines 102a and 102b is provided to one of the columns of the pixel matrix. Clock lines 103a and 103b are connected to the transfer gate, clock lines 104a and 104b are connected to the reset gate, and clock lines 105a and 105b are connected to the gate of the separation transistor QX.

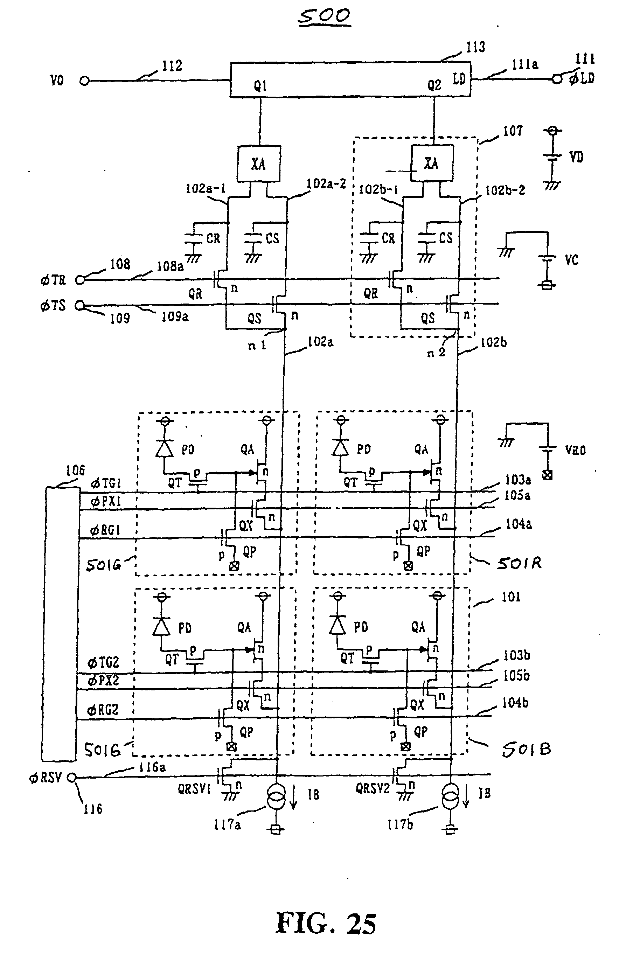

FIG. 25 is a schematic circuit diagram of the motion-detecting solid-state image sensor 500. The structure and operation of the motion-detecting solid-state image sensor 500 are identical to that of the motion-detecting solid-state image sensor 110 described above with respect to the sixth example embodiment and FIG. 12, except that the individual pixels (picture elements) are provided with color filters.

Two green pixels 501G are associated with the vertical readout line 102a, while red and blue pixels 501R, 501B are associated with the vertical readout line 102b. The pixels 501G, 501G, 501R, and 501B have color filters 511G, 511G, 511R, and 511B (not shown) of the associated colors. The differential signals produced by the difference-value-detection circuits 107 thus represent the intensity changes of the respective color components (green, red, and blue). These are successively output from the output VO in response to the rising of the clock pulse supplied to the clock terminal (not shown) of the shift register 113.

In addition to the same advantages provided by the sixth example embodiment described above, the color sensitivity of the eleventh example embodiment allows motion detection with an image in which luminous intensity does not change, but spectral intensity does.

Twelfth Example Embodiment

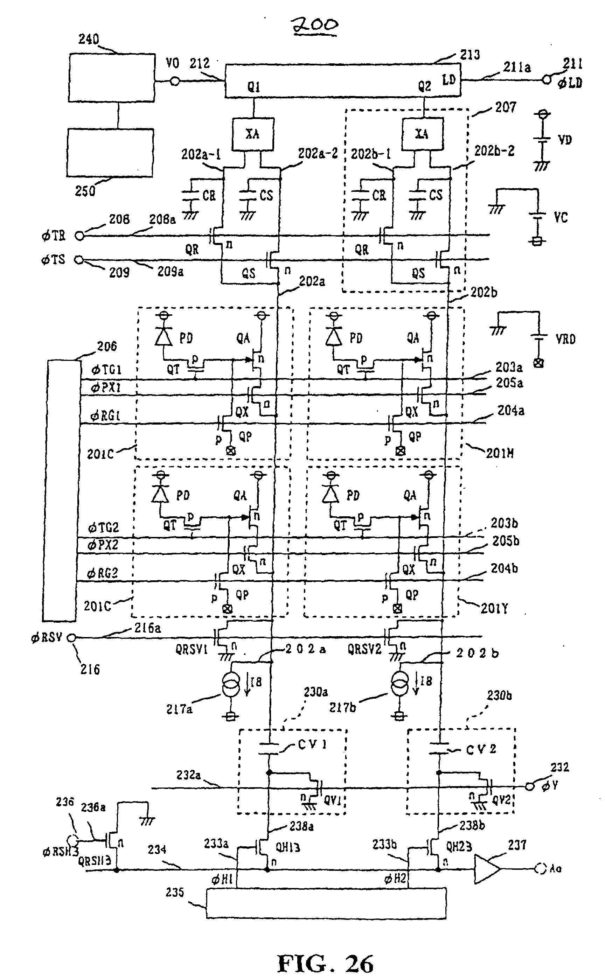

FIG. 26 is a schematic diagram of the circuit structure of a twelfth example embodiment of the present invention. The motion-detecting solid-state image sensor 200 has a light-receiving unit consisting of three types of color pixels which comprises a complementary color system (i.e., a cyan-magenta-yellow {"CMY"} surface color system). FIG. 26 shows only four pixels 201C, 201C, 201M, and 201Y for the sake of convenience. In this embodiment, a signal processor 240 and a motion determination circuit 250 are connected to the output VO. In addition, video signal generators 230a and 230b are connected to the vertical readout lines 202a and 202b, respectively. All other structure of the motion-detecting solid-state image sensor 200 is the same as the like-numbered structure of the motion-detecting solid-state sensor 500 of the eleventh example embodiment, shown in FIG. 25.

Pixels 201C, 201C, 201M, and 201Y are arranged in a matrix with a predetermined pattern. In this embodiment, the left column includes two cyan pixels 201C and is associated with the vertical readout line 202a, while the right column includes the pixels 201M and 201Y and is associated with the vertical readout line 202b. The cyan pixels 201C have cyan-transmissive filters in their incident surfaces, the magenta pixel 201M has a magenta-transmissive filter in its incident surface, and the yellow pixel 201Y has a yellow-transmissive filter in its incident surface.

The video signal generators 230a and 230b are identical in structure and operation to the unit circuits 330A and 330B of the video signal generator 330, as described above in relation to the ninth example embodiment (FIGS. 17 and 19). Further explanation is thus omitted here.

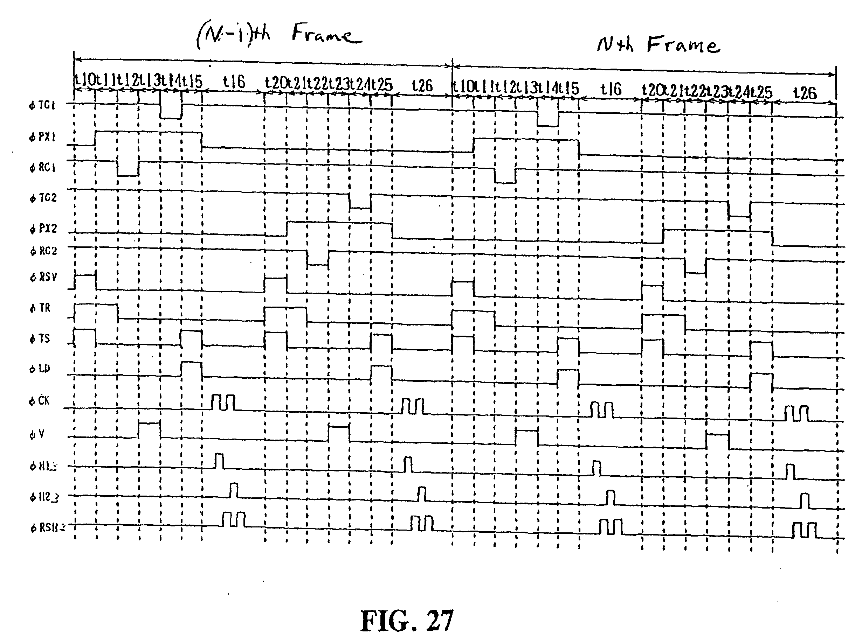

FIG. 27 is a timing chart showing the operation of the motion-detecting solid-state image sensor 200.

As compared to the timing of the eleventh embodiment, which is identical to the timing of the sixth example embodiment shown in FIG. 13, several new pulses, namely, a driving pulse φV for generating analog video signals for the respective color components, driving pulses φH13 and φH23 for transferring the video signals to the second horizontal readout line 234, and a driving pulse φRSH3 for resetting the second horizontal readout line 234 are added. (A clock pulse φCK, employed in the sixth embodiment, / but not shown in FIG. 13, is also added.)

For those pulses in FIG. 27 having corresponding pulses included in the sixth and eleventh embodiments (as shown in FIG. 13), the actions and effects of the FIG.-27 pulses are exactly the same as those in FIG. 13, with one exception. Accordingly, the explanation of the timing and effects of those signals shown in FIG. 13 is omitted here. (The exception to direct correspondence of the pulses is that one additional time interval is included in FIG. 27, in the location between the time intervals t12 and t13, and between t22 and t23 of FIG. 13, during which the dark-current signal DK is read out to the video signal generator, under the control of the driving pulse φV. The time intervals t13-t15 of FIG. 13 thus correspond to the time intervals t14-t16 of FIG. 27, while the time intervals t23-t25 of FIG. 13 correspond to the time intervals t24-t26 of FIG. 27. All other intervals correspond directly to the like-numbered intervals.)

The operation of the driving pulse φV for generating analog video signals for the respective color components, the operation of driving pulses φH13 and φH23 for transferring the video signals to the second horizontal readout line 234, and the operation of the driving pulse φRSH3 for resetting the horizontal readout line 234 are the same as the operation of the corresponding pulses in the ninth example embodiment above (FIG. 20). The operation of the clock signal CK of FIG. 27 also corresponds to that explained relative to FIG. 20. This explanation is accordingly not repeated here.

Similarly to the eleventh example embodiment, differential signals are generated by the difference-detection circuits 207, and successively output from the output VO by means of the shift register 213 every time the clock pulse φCK becomes high. These differential signals are supplied to the signal processor 240.

The signal processor 240 groups the differential signals into the respective color components (cyan, magenta, and yellow) based on the output timing of the shift register 213 and the pulse generation timing of the vertical scanning circuit 206, and monitors the occurrence of the differential signals for each color component.

The inotion-determination circuit 250 is connected to the signal processor 240. The motion-determination circuit 250 counts all of the differential signals in series. When the count value reaches the prescribed value, the motion-determination circuit 250 determines that there is motion of a monitored object.

The differential signals may be counted for each color because the signal processor 240 can process the differential signals supplied from the shift register 213 for each color component. The motion of a moving object may thus be detected based on a specific color component.

In the example embodiments described above, the photoelectric conversion device of the respective picture element is preferably a photo-diode. A buried-type photo-diode may easily be substituted for the photo-diode. By using a buried-type photo-diode as the photoelectric conversion device, depletion layers generated in the pn junctions can be buried beneath the surface of the picture element, allowing a reduction in dark current. Moreover, after the signal charge has been transferred from a buried-type photo-diode, no electric charge remains in the photo-diode. Thus, residual images and reset noise are suppressed.

In the example embodiments, the amplifier (i. e., amplification transistor QA) of each picture element is preferably a JFET. Alternatively, a MOS transistor or a bipolar transistor can be used for the amplification component of each picture element, as long as the MOS transistor or bipolar transistor is a device capable of controlling the output-voltage and/or current, using a gate or a base. Such devices may also be used in combination.

In the example embodiments, the electric charge generated by the photoelectric conversion device is transferred directly to the gate of the amplification device. Alternatively, the generated electric charge can be transferred to and held in a diffusion region, with the electric potential of the diffusion region being detected by the gate of an amplification device such as a MOS transistor, via a signal line. For examples of picture elements of this type, reference is made to "Active Pixel Sensors: Are CCD's Dinosaurs?", Fossum E. R., Proceedings of SPIE: Charge-Coupled Device and Solid State Optical Sensors III, Vol. 1900, pp.2-14 (1993), incorporated herein by reference.

The example embodiments are illustrated above, for ease of illustration, relative to a 2 x 2 matrix or array of picture elements, but actual practical devices according to the invention will typically contain many picture elements. The picture elements can also be arranged linearly, or in any other distribution other than a matrix of rows and columns.

The devices according to the present invention provide for binarization of the differential output signals (the difference-value signals) before they are applied to a horizontal output line or device, such as a shift register. Therefore, images of moving objects can be processed inside the motion-detecting solid-state image sensor. Peripheral components such as an A/D conversion circuit, an image memory, and an image-processing circuit and the like do not need to be installed outside of the motion-detecting solid-state image sensor. Consequently, the cost of a motion-detecting apparatus as a whole can be reduced.

In addition, since the A/D conversion circuit required to be used with a conventional apparatus is not needed with an image sensor according to the present invention, the useful dynamic range of the apparatus according to the invention is broader than with conventional devices. with a device according to the invention, signals can be processed over the intrinsic wide dynamic range of the motion-detecting solid-state image sensor without being limited by the dynamic range of an external A/D converter. The aperture efficiency and the resolution are also improved over conventional configurations in which a difference-value detection circuit is needed for each picture element.

Because each difference-value signal is generated, for each picture element individually, from a first output signal from an initial given frame and a second output signal from a present frame that immediately follows the initial frame, moving objects can be detected, and the images of the moving objects can be processed without being influenced by the fixed-pattern noise of each of the amplification transistors. The effects of random noise are also reduced. As a result, stable images of the moving objects can be obtained and processed with a high degree of accuracy.

Because the difference-value signal has already been binarized when the horizontal readout line reads out the difference-value signal, the difference-value signal can be processed at a high speed. Further, according to the sixth, seventh, and eighth example embodiments of the invention, the binarized difference-value signals are stored in the register of a shift register and then output to the horizontal readout line in synchrony with the clock pulses supplied to the shift register. This allows an additional speed increase.

In devices according to the invention, the electric charge that has been generated and stored in the photoelectric conversion device of each of the picture elements is preferably transferred directly to the gate of the amplification means. In comparison with transferring the electric charge through other signal lines, the degree of deterioration of the signal due to the distribution of the electric charge or the like can be reduced in devices according to the invention. Thus, the image S/N ratio can be improved. If a buried photo-diode is used, dark currents can be suppressed. Moreover, after the signal charge has been transferred from the buried photo-diode, no electric charge remains in the buried photo-diode. Thus residual images and reset noise can be suppressed.

Having illustrated and demonstrated the principles of the invention, it should be apparent to those skilled in the art that the embodiments of the invention can be modified in arrangement and detail without departing from such principles. We claim as the invention all that comes within the scope of the following claims.

**Claims**

1. A solid-state image sensor (10, 310) for detecting motion, comprising:

   multiple picture elements (1) arranged in a matrix of rows and columns, each picture element (1) having a light detector (PD) structured and positioned to generate an electric charge in response to incident light, and a reset device (QP) for eliminating the electric charge from each picture element (1), each picture element (1) being structured so as to emit an output signal corresponding to the electric charge generated by the light detector (PD);
   a vertical readout line (2a, 2b) associated with each respective column of the matrix of picture elements (1) and connected to each picture element (1) in the respective column;
   a vertical scanner (6), connected via control lines (3a, 4a, 5a) to the picture elements (1) in the matrix, structured and arranged to select a row from the matrix of picture elements (1) and to connect the output signal from each picture element (1) in the selected row to the respective vertical readout line (2a, 2b) at a prescribed timing;

   wherein the image sensor (10, 310) comprises:

   a signal comparator (7a, 7b, 320) connected to each respective vertical readout line (2a, 2b), each signal comparator (7a, 7b, 320A, 320B) including a device (CR) for storing a first output signal from a given picture element (1), a comparing device and an output (VO), the comparing device being structured and positioned so as to compare the first output signal stored in the storage device (CR) with a second output signal from the given picture element (1), and to provide, to the output (VO), one single-digit binary value when the difference between the first and second output signals is within a given limit, and another single-digit binary value when the difference between the first and second output signals is not within the given limit; and

a video signal generator (330) comprising a plurality of video-signal-generation units (330a, 330b); each video-signal-generation unit (330a, 330b) being connected to each respective vertical readout line (2a, 2b), and including a device for storing (CV) a third output signal from a given picture element (1), the storing device (CV) being structured and positioned so as to emit a video signal (Ao) by substracting the third output signal from the second output signal;

wherein said vertical scanner (6) is structured and arranged so as to scan the picture elements (1) in the matrix via control lines (3a, 4a, 5a), each picture element (1) output the first output signal, the third output signal and the second output signal in this order; and

the image sensor (10, 310) is structured and arranged so as to allow output of a video signal (Ao) from the video signal generator (330) at the same time as single-digit binary signals (VO) from the signal comparators (320A, 320B).

2. The image sensor (10, 310) of claim 1, further comprising a shift register (313), one register of which is connected to each respective vertical readout line.

3. The image sensor (10, 310) of claim 1, wherein:

each light detector (PD) is structured and positioned so as to both generate and store an electric charge that corresponds to the incident light; and

each picture element (1) includes (a) an electric-charge holder (PD) for holding an electric charge that corresponds to incident light, (b) a signal generator for generating an output signal that corresponds to an electric charge held in the electric-charge holder (PD), and (c) a switching device (QX) positioned to connect and disconnect the signal generator from the corresponding respective vertical readout line (2a, 2b).

4. The image sensor (10, 310) of claim 1, wherein the signal generator comprises an amplifier (QA) and the electric-charge holder comprises a gate of the amplifier (QA), the gate being connected to an output side of the light detector (PD), the amplifier (QA) being positioned and structured to emit the output signal that corresponds to the electric charge that has been generated in response to incident light, when the electric charge is held in the gate of the amplifier (QA).

5. The image sensor (10, 310) of claim 1, wherein each of the picture elements (1) includes a transfer device (QT) positioned and structured so as to transfer the electric charge that is generated in the light detector (PD) directly to the gate of the amplifier (QA).

6. The image sensor (10, 310) of claim 1, wherein the amplifier (QA) comprises a junction-type electric field effect transistor (JFET) including a gate, a source, and a drain.

7. The image sensor (10, 310) of claim 1, wherein the JFET is positioned and structured so as to cause an electric current between the source and the drain to correspond to the electric charge on the gate.

8. The image sensor (10, 310) of claim 1, wherein each of the switching devices (QX) comprises a MOS switch transistor installed between the source of the JFET and one of the vertical readout lines (2a, 2b).

9. The image sensor (10, 310) of claim 1, wherein each of the switching devices (QX) includes a capacitor (CG) that is connected to the gate of the JFET in a manner such that a signal supplied to one of the two terminals of the capacitor (CG) connects and disconnects the JFET from the associated vertical readout line (2a, 2b).

10. The image sensor (10, 310) of claims 1, wherein each of the signal comparators (7a, 7b, 320A, 320B) comprises a second storage device (CS) for storing the second output signal.

11. The image sensor (10, 310) of claim 1, wherein each signal comparator (7a, 7b, 320A, 320B) comprises:

a binarizer (XA) having two inputs;
a first sample-and-hold circuit (2a-1, 2b-1) connected to one of the two inputs of the binarizer (XA), and a second sample-and-hold circuit (2a-2, 2b-2) connected to the other of the two inputs of the binarizer (XA), wherein the sample-and-hold circuits are so structured and positioned that the first sample-and-hold circuit (2a-1, 2b-1) triggers a given logic level output from the binarizer when the first output signal is sufficiently greater than the second output signal, and the second sample-and-hold circuit (2a-2, 2b-2) triggers the given logic level output from the binarizer when the second output signal is sufficiently greater than the first output signal.

12. The image sensor (10, 310) of claim 1, wherein the light detector (PD) comprises a photo-diode.

13. The image sensor (10, 310) of claim 1, wherein the light detector (PD) comprises a buried photo-diode.

14. The image sensor (10, 310) of claim 1, wherein the picture elements (1) are of three types, each type being particularly sensitive to a particular color of incident light.

**Patentansprüche**

1. Festkörper-Bildsensor (10, 310) zum Erkennen von Bewegung aufweisend:

Mehrere Bildelemente (1), angeordnet in einer Matrix aus Zeilen und Spalten, wobei jedes Bildelement (1) einen Lichtdetektor (PD) aufweist, welcher so strukturiert und angeordnet ist, dass eine elektrische Ladung als Reaktion auf einfallendes Licht erzeugt wird, und eine RücksetzEinrichtung (QP) zum Beseitigen der elektrischen Ladung von jedem Bildelement (1), wobei jedes Bildelement (1) strukturiert ist, dass ein Ausgangssignal ausgegeben wird, das zu der von dem Lichtdetektor (PD) erzeugten elektrischen Ladung korrespondiert; jeweils eine Vertikal-Ausleseleitung (2a, 2b), welche einer entsprechenden Spalte der Matrix der Bildelemente (1) zugeordnet ist, und mit jedem Bildelement (1) in der entsprechenden Spalte gekoppelt ist; einen Vertikal-Scanner (6), welcher mittels Steuerleitungen (3a, 4a, 5a) mit den Bildelementen (1) in der Matrix gekoppelt ist, so strukturiert und angeordnet, dass eine Zeile aus der Matrix von Bildelementen (1) ausgewählt wird und das Ausgangssignal von jedem Bildelement (1) in der ausgewählten Zeile mit der entsprechenden Vertikal-Ausleseleitung (2a, 2b) in einer festgelegten Zeitsteuerung gekoppelt wird;

wobei der Bildsensor (10, 310) aufweist:

jeweils einen Signalvergleicher (7a, 7b, 320), welcher mit einer entsprechenden Vertikal-Ausleseleitung (2a, 2b) gekoppelt ist, wobei jeder Signalvergleicher (7a, 7b, 320A, 320B) eine Speichereinrichtung (CR) zum Speichern eines ersten Ausgangssignals eines gegebenen Bildelements (1), eine Vergleichseinrichtung und einen Ausgang (VO) enthält, wobei die Vergleichseinrichtung so strukturiert und angeordnet ist, dass das in der Speichereinrichtung (CR) gespeicherte erste Ausgangssignal mit einem zweiten Ausgangssignal des gegebenen Bildelements (1) verglichen wird, und dass am Ausgang (VO) ein einstelliger Binärwert bereitgestellt wird, wenn die Differenz zwischen dem ersten Ausgangssignal und dem zweiten Ausgangssignal innerhalb einer gegebenen Grenze ist, und ein anderer einstelliger Binärwert, wenn die Differenz zwischen dem ersten Ausgangssignal und dem zweiten Ausgangssignal nicht innerhalb der gegebenen Grenze ist; und einen Videosignalgenerator (330), welcher eine Vielzahl von Videosignal-Erzeugungseinheiten (330a, 330b) aufweist, wobei jede Videosignal-Erzeugungseinheit (330a, 330b) mit jeder entsprechenden Vertikal-Ausleseleitung (2a, 2b) verbunden ist, und eine Speichereinrichtung (CV) eines dritten Ausgangssignals eines gegebenen Bildelementes (1) aufweist, wobei die Speichereinrichtung (CV) so strukturiert und angeordnet ist, dass ein Videosignal (Ao) ausgegeben wird, indem das dritte Ausgangssignal vom zweiten Ausgangssignal subtrahiert wird;

wobei der Vertikal-Scanner (6) so strukturiert und angeordnet ist, dass die Bildelemente (1) in der Matrix mittels Steuerungsleitungen (3a, 4a, 5a) abgetastet werden, wobei jedes Bildelement (1) das erste Ausgangssignal, das dritte Ausgangssignal und das zweite Ausgangssignal in dieser Reihenfolge ausgibt; und der Bildsensor (10, 310) so strukturiert und angeordnet ist, dass die Ausgabe eines Videosignals (Ao) vom Videosignalgenerator (330) zur gleichen Zeit wie einstellige Binärsignale (VO) vom Signalvergleicher (320A, 320B) erlaubt ist.

2. Bildsensor (10, 310) gemäß Anspruch 1, welcher zusätzlich ein Schieberegister (313) aufweist, wobei jedes Register desselben mit einer jeweiligen entsprechenden Vertikal-Ausleseleitung gekoppelt ist.

3. Bildsensor (10, 310) gemäß Anspruch 1, wobei:

jeder Lichtdetektor (P) so strukturiert und angeordnet ist, dass er eine elektrische Ladung, die dem einfallenden Licht entspricht, sowohl erzeugt, als auch speichert; und

jedes Bildelement (1) (a) einen Elektrische-Ladung-Halter (PD) zum Halten einer elektrischen Ladung, die einfallendem Licht entspricht, (b) einen Signalgenerator zum Erzeugen eines Ausgangssignals, das einer im Elektrische-Ladung-Halter (PD) gehaltenen elektrischen Ladung entspricht, und (c) eine Schalteinrichtung (QX), welche so angeordnet ist, dass der Signalgenerator mit der entsprechenden zugehörigen Vertikal-Ausleseleitung (2a, 2b) gekoppelt oder von dieser getrennt wird, aufweist.

4. Bildsensor (10, 310) gemäß Anspruch 1, wobei der Signalgenerator einen Verstärker (QA) aufweist und der Elektrische-Ladung-Halter ein Gate des Verstärkers (QA) aufweist, wobei das Gate mit einer Ausgangsseite des Lichtdetektors (PD) gekoppelt ist, der Verstärker (QA) so angeordnet und strukturiert ist, dass das Ausgangssignal ausgegeben wird, das der elektrischen Ladung entspricht, die als Reaktion auf einfallendes Licht erzeugt wurde, wenn die elektrische Ladung im Gate des Verstärkers (QA) gehalten ist.

5. Bildsensor (10, 310) gemäß Anspruch 1, wobei jedes der Bildelemente (1) eine Übertragungseinrichtung (QT) enthält, welche so angeordnet und strukturiert ist, dass die elektrische Ladung, die im Lichtdetektor (PD) erzeugt wird, direkt zum Gate des Verstärkers (QA) übertragen wird.

6. Bildsensor (10, 310) gemäß Anspruch 1, wobei der Verstärker (QA) einen Sperrschicht-Feldeffekt-Transistor (JFET) mit einem Gate, einer Source und einer Drain aufweist.

7. Bildsensor (10, 310) gemäß Anspruch 1, wobei der JFET so angeordnet und strukturiert ist, dass er bewirkt, dass ein elektrischer Strom zwischen Source und Drain der elektrischen Ladung am Gate entspricht.

8. Bildsensor (10, 310) gemäß Anspruch 1, wobei jede der Schalteinrichtung (QX) einen MOS-Schalt-Transistor aufweist, der zwischen die Source des JFET und einer der Vertikal-Ausleseleitungen (2a, 2b) geschaltet ist.

9. Bildsensor (10, 310) gemäß Anspruch 1, wobei jedes der Schalteinrichtung (QX) eine Kapazität (CG) aufweist, die mit dem Gate des JFET auf eine Weise gekoppelt ist, dass ein Signal, das an einem der zwei Anschlüsse des Kondensators (CG) angelegt ist, den JFET mit der zugeordneten Vertikal-Ausleseleitung (2a, 2b) koppelt oder sie entkoppelt.

10. Bildsensor (10, 310) gemäß Anspruch 1, wobei jeder der Signalvergleicher (7a, 7b, 320A, 320B) eine zweite Speichereinrichtung (CS) zum Speichern des zweiten Ausgangssignals aufweist.

11. Bildsensor (10, 310) gemäß Anspruch 1, wobei jeder Signalvergleicher (7a, 7b, 320A, 320B) aufweist:

einen Binärcodierer (XA), welcher zwei Eingänge hat;
einen ersten Abtast- und Halteschaltkreis (2a-1, 2b-1), welcher mit einem der zwei Eingänge des Binärcodierers (XA) gekoppelt ist, und einen zweiten Abtast- und Halteschaltkreis, (2a-2, 2b-2) welcher mit dem anderen der zwei Eingänge des Binärcodierers (XA) gekoppelt ist, wobei die Abtast- und Halteschaltkreise so strukturiert und angeordnet sind, dass der erste Abtast- und Halteschaltkreis (2a-1, 2a-2) eine gegebene Logik-Pegel-Ausgabe vom Binärcodierer auslöst, wenn das erste Ausgangssignal genügend größer als das zweite Ausgangssignal ist, und der zweite Abtast- und Halteschaltkreis (2a-2, 2b-2) die gegebene Logik-Pegel-Ausgabe vom Binärcodierer auslöst, wenn das zweite Ausgangssignal genügend größer als das erste Ausgangssignal ist.

12. Bildsensor (10, 310) gemäß Anspruch 1, wobei der Lichtdetektor (PD) eine Photo-Diode aufweist.

13. Bildsensor (10, 310) gemäß Anspruch 1, wobei der Lichtdetektor (PD) eine vergrabene Photo-Diode aufweist.

14. Bildsensor (10, 310) gemäß Anspruch 1, wobei die Bildelemente (1) drei Typen angehören, wobei jeder Typ vor allem für eine bestimmte Farbe des einfallenden Lichtes empfindlich ist.

**Revendications**

1. Capteur d'images à l'état solide (10,310) pour détecter un déplacement, comprenant :

de multiples éléments d'image (1) disposés suivant une matrice de lignes et de colonnes, chaque élément d'image (1) possédant un détecteur de lumière (PD) structuré et positionné de manière à produire une charge électrique en réponse à une lumière incidente, et un dispositif de remise à l'état initial (QP) pour éliminer la charge électrique émanant de chaque élément d'image (1), chaque élément d'image (1) étant structuré de manière à émettre un signal de sortie correspondant à la charge électrique produite par le détecteur de lumière (PD);

une ligne verticale de lecture (2a,2b) associée à chaque colonne respective de la matrice d'éléments d'image (1) et connectée à chaque élément d'image (1) dans la colonne respective;

un scanner ou analyseur vertical (6) connecté par l'intermédiaire de lignes de commande (3a, 4a,5a) aux éléments d'image (1) contenus dans la matrice, structuré et agencé de manière à sélectionner une ligne de la matrice d'éléments d'image (1) et à connecter le signal de sortie provenant de chaque élément d'image (1) dans la ligne sélectionnée à la ligne verticale respective de lecture (2a,2b) selon un cadencement prescrit;

dans lequel le capteur d'images (10,310) comprend :

un comparateur de signaux (7a,7b,320) connecté à chaque ligne verticale respective de lecture (2a,2b), chaque comparateur de signaux (7a,7b,301A,301B) incluant un dispositif (CR) pour mémoriser un premier signal de sortie délivré par un élément d'image donné (1), un dispositif comparateur et un signal de sortie (VO), le dispositif comparateur étant structuré et positionné de manière à comparer le premier signal de sortie mémorisé dans le dispositif de mémoire (CR) à un second signal de sortie délivré par l'élément d'image donné (1), et pour délivrer, à la sortie (VO), une valeur binaire à un seul chiffre lorsque la différence entre les premier et second signaux de sortie se situe en-deçà d'une limite donnée, et une autre valeur binaire à un seul chiffre lorsque la différence entre les premier et second signaux de sortie n'est pas située en-deçà de la limite donnée; et un générateur de signaux vidéo (330) comprenant une pluralité d'unités (330a,330b) de production de signaux vidéo; chaque unité (330a, 330b) de production de signaux vidéo étant connectée à chaque ligne verticale respective de lecture (2a,2b), et comprenant un dispositif (CV) pour mémoriser un troisième signal de sortie provenant d'un élément d'image donné (1), le dispositif de mémoire (CV) étant structuré et positionné de manière à émettre un signal vidéo (AO) par soustraction du troisième signal de sortie, du second signal de sortie;

dans lequel ledit scanner vertical (6) est structuré et agencé de manière à balayer les éléments d'image (1) de la matrice par l'intermédiaire de lignes de commande (4a,5a), chaque élément d'image (1) délivrant le premier signal de sortie, le troisième signal de sortie et le second signal de sortie dans cet ordre; et

le capteur d'images (310) est structuré et agencé de manière à permettre la sortie d'un signal vidéo (Ao) provenant du générateur de signaux vidéo (330) au même moment que des signaux binaires à un seul chiffre (Vo) provenant des comparateurs de signaux (320A,320B).

2. Capteur d'images (10,310) selon la revendication 1, comprenant en outre un registre duquel à décalage (313), un registre est connecté à chaque ligne verticale respective de lecture.

3. Capteur d'images (10,310) selon la revendication 1, dans lequel :

chaque détecteur de lumière (PD) est structuré et positionné de manière à la fois à produire et mémoriser une charge électrique qui correspond à la lumière incidente; et chaque élément d'image (1) inclut (a) un dispositif de retenue (PD) de charge électrique servant à retenir une charge électrique qui correspond à une lumière incidente, (b) un générateur de signaux servant à produire un signal de sortie qui correspond à la charge électrique retenue dans le dispositif de retenue de charge électrique (PD), et (c) un dispositif de commutation (QX) positionné de manière à connecter et déconnecter le générateur de signaux par rapport à la ligne verticale respective correspondante de lecture (2a,2b).

4. Capteur d'images (10,310) selon la revendication 1, dans lequel le générateur de signaux comprend un amplificateur (QA), et le dispositif de retenue de charge électrique comprend une grille de l'amplificateur (QA), la grille étant connectée à un côté de sortie du détecteur de lumière (PD), l'amplificateur (QA) étant positionné et structuré de manière à émettre le signal de sortie qui correspond à une charge électrique qui a été produite en réponse à une lumière incidente, lorsque la charge électrique est retenue dans la grille de l'amplificateur (QA).

5. Capteur d'images (10,310) selon la revendication 1, dans lequel chacun des éléments d'images (1) comprend un dispositif de transfert (QT) positionné et structuré de manière à transférer directement la charge électrique, qui est produite dans le détecteur de lumière (PD) à la grille de l'amplificateur (QA).

6. Capteur d'images (10,310) selon la revendication 1, dans lequel l'amplificateur (QA) comprend un transistor à effet de champ électrique du type à jonction (JFET) comprenant une grille, une source et un drain.

7. Capteur d'images (10,310) selon la revendication 1, dans lequel le transistor JFET est positionné et structuré de manière à amener un courant électrique entre la source et le drain pour correspondre à la charge appliquée à la grille.

8.  Capteur d'images (10,310) selon la revendication 1, dans lequel chacun des dispositifs de commutation (QX) comprend un transistor de commutation MOS installé entre la source du transistor JFET et l'une des lignes verticales de lecture (2a,2b).

9.  Capteur d'images (10,310) selon la revendication 1, dans lequel chacun des dispositifs de commutation (QX) inclut un condensateur (CG) qui est connecté à la grille du transistor (JFET) de telle sorte qu'un signal envoyé à l'une des deux bornes du condensateur (CG) connecte et déconnecte le transistor JFET de la ligne verticale associée de lecture (2a,2b).

10. Capteur d'images (10,310) selon la revendication 1, dans lequel chacun des comparateurs de signaux (7a,7b,320a,320b) comprend un second dispositif de mémoire (CS) pour mémoriser le second signal de sortie.

11. Capteur d'images (10,310) selon la revendication 1, dans lequel chaque comparateur de signaux (7a, 7b,320a,320b) comprend

    une unité de binarisation (XA) comportant deux entrées;

    un premier circuit d'échantillonnage et de maintien (2a-1, 2b-1) connecté à l'une des deux entrées de l'unité de binarisation (XA), et un second circuit d'échantillonnage et de maintien (2a-2, 2b-2) connecté à l'autre des deux entrées de l'unité de binarisation (XA), dans lequel

    les circuits d'échantillonnage et de maintien sont structurés et positionnés de telle sorte que le premier circuit d'échantillonnage et de maintien (2a-1, 2b-1) déclenche un niveau logique donné délivré par l'unité de binarisation lorsque le premier signal de sortie est suffisamment supérieur au second signal de sortie, et le second circuit d'échantillonnage et de maintien (2a-2, 2b-2) déclenche le niveau logique donné délivré par l'unité de binarisation lorsque le second signal de sortie est suffisamment supérieur au premier signal de sortie.

12. Capteur d'images (10,310) selon la revendication 1, dans lequel le détecteur de lumière (PD) comprend une photodiode.

13. Capteur d'images (10,310) selon la revendication 1, dans lequel le détecteur de lumière (PD) comprend une photodiode enterré.

14. Capteur d'images (10,310) selon la revendication 1, dans lequel les éléments d'image (1) sont de trois types, chaque type étant particulièrement sensible à une couleur particulière d'une lumière incidente.

**FIG. 1**

(Prior Art)

**FIG. 2**

FIG. 3

**FIG. 4**

**FIG. 5**

**FIG. 6**

**FIG. 7**

FIG. 8

**FIG. 9**

*50*

**FIG. 10**

**FIG. 11**

41

**FIG. 12**

**FIG. 13**

FIG. 14

FIG. 15

FIG. 16

**FIG. 17**

**FIG. 18**

**FIG. 19**

**FIG. 20**

FIG. 21

49

**FIG. 22**

FIG. 23

FIG. 24

511B  511R  514
513
103a
105a
104a

532  421(PD)
521
411  423(QT)
524(422A)  525  412
422(QA)  (422S)
526

52

EP 0 871 326 B1

EP 0 871 326 B1

**FIG. 25**

**FIG. 26**

FIG. 27

EP 0 871 326 B1